(19) Europäisches Patentamt
European Patent Office
Office européen des brevets

(11) **EP 3 975 032 A1**

(12) **EUROPEAN PATENT APPLICATION**

(43) Date of publication:
**30.03.2022 Bulletin 2022/13**

(21) Application number: **21153977.0**

(22) Date of filing: **28.01.2021**

(51) International Patent Classification (IPC):
**G06F 30/20** (2020.01)   **G06F 111/06** (2020.01)
**G06N 3/04** (2006.01)   **G06N 3/063** (2006.01)
**G06N 5/00** (2006.01)

(52) Cooperative Patent Classification (CPC):
**G06F 30/20; G06N 5/003;** G06F 2111/06;
G06N 3/0445; G06N 3/0472; G06N 3/063

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2020   JP 2020069398**

(71) Applicant: **FUJITSU LIMITED
Kanagawa 211-8588 (JP)**

(72) Inventor: **Matsuura, Satoshi
Kanagawa, 211-8588 (JP)**

(74) Representative: **Hoffmann Eitle
Patent- und Rechtsanwälte PartmbB
Arabellastraße 30
81925 München (DE)**

(54) **OPTIMIZATION APPARATUS, OPTIMIZATION METHOD, AND OPTIMIZATION PROGRAM**

(57)    An optimization apparatus includes an annealing unit changes a state of any one of a plurality of state variables included in an evaluation function, calculates a change amount of energy, and obtains a first total change amount by adding a second total change amount and the calculated change amount, a speculative inversion control unit repeats a process for speculatively selecting the state variable to be changed and making the annealing unit obtain the first total change amount, an adoption determination unit stochastically determines whether or not to adopt a state transition in which a predetermined number of the state variables are changed by the annealing unit, an energy calculation unit calculates transited energy when the state transition being determined to be adopted, and a search unit specifies the transited energy as a minimum energy when the transited energy is less than a previously specified minimum energy.

FIG. 1

**Description**

[Field]

The embodiments discussed herein are related to an optimization apparatus, an optimization method, and an optimization program.

[Background Art]

In our society, a large number of "combinatorial optimization problems", in which an optimum combination is selected from among combinations of large number of elements under constraints such as limited people, time, or the like, exist regarding disaster recovery procedures, delivery route optimization, or the like. One of these methods of searching an optimum solution of the combinatorial optimization problem is an Ising calculation device obtained by applying a simulated annealing method that is one type of Monte Carlo method and is a method for stochastically obtaining a solution using a random number value.

The Ising calculation device is a calculation device that searches for a combination of variables that minimizes energy of an Ising model expressed by a predetermined evaluation formula. There is a case where this variable is referred to as a spin, a value of the variable is referred to as a spin state, and a transition of the spin state is referred to as inversion.

The Ising calculation device determines whether or not each spin is inverted based on the inversion determination formula, sequentially transitions the states, and searches for the minimum energy. Then, by formulating the actual problem into an Ising model energy formula and searching for a combination of spin states that minimizes the energy by the Ising calculation device, it is possible to solve various types of combinatorial optimization problems.

Here, a minimum energy search method using the simulated annealing method will be simply described. The Ising calculation device starts search from an initial state in which zero or one is assigned to each variable of an evaluation function expressing a problem to be solved. Then, the Ising calculation device selects a state close to a current state from the current state of the combination of the variables, and considers a state transition. The state close to the current state is, for example, a state in which a state of a single variable is changed. Next, the Ising calculation device calculates an energy change amount for the state, and stochastically selects whether or not to select to adopt the state transition or to maintain the original state without adopting the state transition according to the calculated value. If an adoption probability in a case where the energy decreases is set to be higher than an adoption probability in a case where the energy increases, the state is changed in average in a direction in which the energy decreases, and the Ising calculation device can finally reach the optimum solution or reach energy close to the optimum solution. If the state transition is deterministically adopted in a case where the energy decreases and is not adopted in a case where the energy increases, the change in the energy is a monotonous decrease with respect to time in a broad sense. However, in a case where a local solution is reached, no more state transition occurs, and it is difficult to expect to reach the optimum solution. Therefore, in the search in the combinatorial optimization problem, it is important to stochastically determine whether or not to adopt the state transition.

Note that, methods of solving the combinatorial optimization problem include related art that allows to update a state in a case where states of a plurality of neuron circuits that is not mutually connected are simultaneously changed on the basis of a plurality of weight values when the states of the plurality of neuron circuits are simultaneously updated. Furthermore, there is related art that escaping from a local solution by searching for only a state where a partial evaluation function that is a component of an evaluation function is more improved than the local solution.

[Citation List]

[Patent Literature]

[PTL1] Japanese Laid-open Patent Publication No. 2017-219952.
[PTL2] Japanese Laid-open Patent Publication No. 2006-072820.

[Summary of Invention]

[Technical Problem]

However, the following problems occur in the related art in which whether or not each spin is inverted is determined, a state is sequentially transitioned, and search is performed. For example, even if a lower energy state exists in a surrounding spin state such as a state where two spins are inverted, in a case where the energy largely increases in a case where one spin is inverted, a transition to the high energy state is selected once.

As a simple example, in a case where there is a constraint that the number of spins in the single state is an even number, for example, all the states that can be transitioned by inverting only one bit are the high energy states, and it is difficult to shift the state to another state. In this way, with the related art that performs adoption determination on the basis of an inversion determination formula for each spin, there is a possibility that it is difficult to efficiently search for the minimum energy depending on the type of the problem.

Furthermore, even with the related art that allows to update the state in a case where the states of the plurality of neuron circuits that is not mutually connected are simultaneously changed, it is difficult to transition to a lower energy state after the transition to the high energy state is selected. The same applies to related art that escapes from a local solution by searching for only a state where a partial evaluation function is more improved than the local solution. Therefore, even if these related art is used, there is a possibility that it is difficult to efficiently search for the minimum energy depending on the type of the problem.

The disclosed technique has been made in view of the above, and an object of the disclosed technique is to provide an optimizer, an optimization method, and an optimization program that improve a process performance for a combinatorial optimization problem.

[Solution to Problem]

According to an aspect of the embodiments, an optimization apparatus includes a temperature control unit, an annealing unit, a speculative inversion control unit, an adoption determination unit, an energy calculation unit, and a search unit. The temperature control unit configured to control a temperature value indicating a temperature. The annealing unit configured to change a state of any one of a plurality of state variables included in an evaluation function that represents energy, calculate a change amount of the energy represented by the evaluation function, and newly obtain a total change amount by adding the calculated total change amount and the acquired change amount. The speculative inversion control unit configured to repeat a process for speculatively selecting the state variable to be changed and making the annealing unit obtain the first total change amount until the changed state variables reaches a predetermined number. The adoption determination unit configured to repeat a process for speculatively selecting the state variable to be changed and making the annealing unit obtain the total change amount until the changed state variables reaches a predetermined number. The energy calculation unit configured to calculate transited energy after performed the state transition when the state transition being determined to be adopted. The search unit configured to obtain a minimum energy by setting the transited energy as the minimum energy when the transited energy is less than the minimum energy.

[Effect]

In one aspect, the invention can improve processing performance for combinatorial optimization problems.

[Brief Description of Drawings]

FIG. 1 is a block diagram of an Ising calculation device according to a first embodiment;
FIG. 2 is a block diagram illustrating details of an annealing unit according to the first embodiment;
FIG. 3A is a flowchart of an optimum solution search process by the Ising calculation device according to the first embodiment;
FIG. 3B is a flowchart of an optimum solution search process by the Ising calculation device according to the first embodiment;
FIG. 4 is an arrangement configuration diagram of the Ising calculation device;
FIG. 5 is a diagram of a circuit image of a unit circuit;
FIG. 6 is a diagram of an operation image at the time when the Ising calculation device according to the first embodiment executes the optimum solution search process;
FIG. 7 is a flowchart of a process when the Ising calculation device is used;
FIG. 8 is a block diagram illustrating details of an annealing unit according to a second embodiment;
FIG. 9A is a flowchart of an optimum solution search process by an Ising calculation device according to the second embodiment;
FIG. 9B is a flowchart of an optimum solution search process by an Ising calculation device according to the second embodiment;

FIG. 10 is a diagram of an operation image at the time when the Ising calculation device according to the second embodiment executes the optimum solution search process;

FIG. 11 is a block diagram illustrating details of an annealing unit according to a third embodiment;

FIG. 12 is a diagram illustrating an example of an initial value setting instruction by an Ising calculation device according to the third embodiment;

FIG. 13A is a flowchart of an optimum solution search process of a problem having an n-hot constraint by the Ising calculation device according to the third embodiment;

FIG. 13B is a flowchart of an optimum solution search process of a problem having an n-hot constraint by the Ising calculation device according to the third embodiment;

FIG. 14 is a diagram illustrating a modification of the Traveling Salesman Problem to the spins;

FIG. 15 is a block diagram illustrating details of an annealing unit according to a fourth embodiment;

FIG. 16 is a diagram illustrating an example of a spin inversion method according to a 2way-1hot constraint by an Ising calculation device according to the fourth embodiment;

FIG. 17 is a diagram illustrating an example of a reading condition according to the fourth embodiment; and

FIG. 18 is a diagram illustrating an example of an initial value setting instruction by the Ising calculation device according to the fourth embodiment.

[Description of Embodiments]

Hereinafter, embodiments of an optimizer, an optimization method, and an optimization program disclosed herein will be described in detail with reference to the drawings. Note that the following embodiments do not limit the optimizer, the optimization method, and the optimization program disclosed herein.

[First Embodiment]

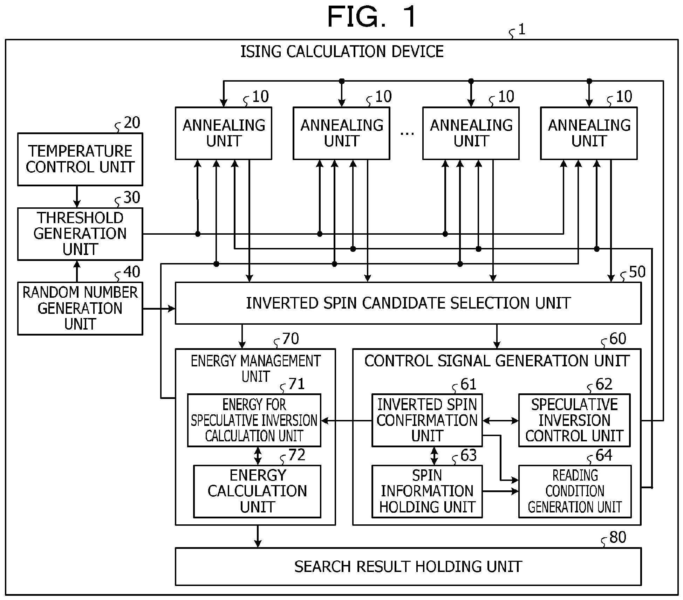

FIG. 1 is a block diagram of an Ising calculation device according to a first embodiment. An Ising calculation device 1 includes a plurality of annealing units 10, a temperature control unit 20, a threshold generation unit 30, a random number generation unit 40, an inverted spin candidate selection unit 50, a control signal generation unit 60, an energy management unit 70, and a search result holding unit 80. For example, 1024 annealing units 10 are mounted on the single Ising calculation device 1.

The Ising calculation device 1 is an optimizer that searches for a combination ($x_0$, $x_1$,..., $x_n$) of variables $x_i$ that minimizes energy of the Ising model expressed by the formulas (1) to (4) that are evaluation functions. Here, a variable $x_i$ in the formula (1) is a state variable and takes a value of zero or one. In the following description, the variable $x_i$ is referred to as a "spin", a value of the variable $x_i$ is referred to as a "spin state", and a transition of the spin state is referred to as "inversion". For example, the spin state is represented as zero or one. Then, the inversion corresponds to the transition of the spin state from zero to one or from one to zero.

[Expression 1]

$$E = - \sum_{<i,j>} W_{ij}\, x_i x_j - \sum_i b_i x_i + C \quad \cdots (1)$$

[Expression 2]

$$\Delta E_i = \begin{cases} -h_i (for\ x_i = 0 \rightarrow 1) \\ +h_i (for\ x_i = 1 \rightarrow 0) \end{cases} \quad \cdots (2)$$

[Expression 3]

$$h_i = \sum_j W_{ij}\, x_j + b_i \quad \cdots (3)$$

[Expression 4]

$$\delta h_i = \begin{cases} -W_{ij} \left( for\ x_j = 0 \rightarrow 1 \right) \\ +W_{ij} \left( for\ x_j = 1 \rightarrow 0 \right) \end{cases} \quad \cdots (4)$$

Here, the reference E represents energy, and the reference $\Delta E_i$ represents an energy change amount in a case where $x_i$ is inverted. Furthermore, the reference $h_i$ represents a local field with $x_i$, and the reference $\delta h_i$ represents a change amount of the local field with $x_i$. Furthermore, in the following description, there is a case where the energy change amount is indicated as $\Delta E$.

Furthermore, the Ising calculation device 1 according to the present embodiment inverts another spin while temporarily maintaining an inversion of a specific spin regardless of an evaluation result of an energy change in a case where the specific spin is inverted. Then, the Ising calculation device 1 superimposes the inversions of the plurality of spins, and determines whether or not to collectively adopt the inversions of the plurality of spins according to an evaluation result of an energy change in that case. Therefore, in the following description, to collectively invert the plurality of spins is referred to as "collective inversion". Furthermore, in a case where the collective inversion is performed, to temporarily invert the spin regardless of the evaluation result of the energy change is referred to as "speculative inversion". Furthermore, a spin that is temporarily inverted by the speculative inversion is referred to as a "speculative inverted spin". In a case where the collective inversion is performed, a speculative inverted spin when an energy change to be evaluated used to determine whether or not to perform adoption is acquired is referred to as an "adoption determination target spin".

The temperature control unit 20 is a circuit that controls a value of a temperature parameter. The temperature parameter is a temperature value used to control the temperature. In the following description, there is a case where the temperature parameter is represented as T.

For example, according to a pseudo-annealing method, the temperature control unit 20 lowers the temperature by gradually decreasing the value of the temperature parameter according to the number of iterations of the search, starting from a sufficiently high initial temperature. Starting from an initial state, the iteration is repeated while lowering the temperature by the temperature control unit 20. When an end determination condition such as achievement of a certain number of times of iterations or a value of energy falling below a certain value is satisfied, the operation is terminated. In addition, the temperature control unit 20 can use a replica exchange method that searches for the minimum energy while switching a low temperature condition and a high temperature condition by executing several systems called replicas having different temperature conditions in parallel and exchanging the systems for each of the predetermined number of times of iterations.

The random number generation unit 40 is a circuit that generates a random number value. The random number generation unit 40 outputs the generated random number to the threshold generation unit 30 and the inverted spin candidate selection unit 50.

The threshold generation unit 30 is a circuit that generates a threshold used to determine whether or not each spin is an inversion candidate. The threshold generation unit 30 acquires a temperature parameter from the temperature control unit 20. Furthermore, the threshold generation unit 30 acquires a random number value from the random number generation unit 40.

Here, in the present embodiment, according to the following formula (5), inversion of the variable is adopted. For example, the inversion of the variable is adopted with a smaller one of $e^{-\Delta E/T}$ or one as an adoption probability.

[Expression 5]

$$P = \min \left[ 1, e^{\frac{\Delta E}{T}} \right] \quad \cdots (5)$$

In the present embodiment, according to the random number generated by the random number generation unit 40, the inverted spin is stochastically adopted according to the formula (5). In this case, the condition that the adoption probability is according to the formula (5) is the same as that the inversion is adopted in a case where the following formula (6) is satisfied by using a uniform random number r.

[Expression 6]

$$\Delta E < T \times \log \frac{1}{r} \quad \cdots (6)$$

This formula (6) is a formula to determine whether or not to adopt the inversion, and may be referred to as an "inversion determination formula" below.

Therefore, the threshold generation unit 30 generates a value on a right side of the formula (6) by using the temperature parameter and the random number value. Then, the threshold generation unit 30 outputs the generated value on the right side of the formula (6) to the annealing unit 10.

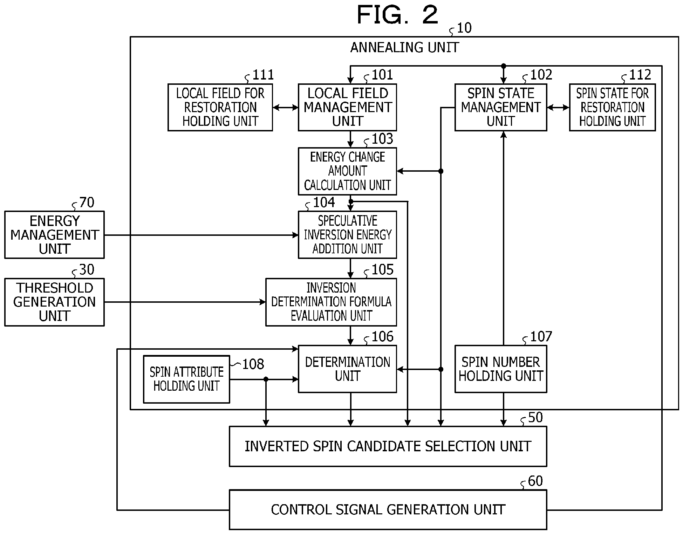

The annealing unit 10 is a circuit that holds a spin state and a local field for one spin and determines whether or not the inverted spin is an inversion candidate on the basis of an energy change amount when the self-spin is inverted. Details of the annealing unit 10 will be described below with reference to FIG. 2. FIG. 2 is a block diagram illustrating details of an annealing unit according to the first embodiment. As illustrated in FIG. 1, the plurality of annealing units 10 exists. Then, although each annealing unit 10 controls a different spin, each annealing unit 10 executes the same process. Therefore, a specific annealing unit 10 will be described below. In the following, the spin to be controlled by each annealing unit 10 is referred to as a self-spin.

As illustrated in FIG. 2, the annealing unit 10 includes a local field management unit 101, a spin state management unit 102, an energy change amount calculation unit 103, a speculative inversion energy addition unit 104, an inversion determination formula evaluation unit 105, a determination unit 106, a spin number holding unit 107, and a spin attribute holding unit 108. Moreover, the annealing unit 10 according to the present embodiment includes a local field for restoration holding unit 111 and a spin state for restoration holding unit 112.

The spin number holding unit 107 holds a spin number to identify the self-spin. For example, the spin number corresponds to i in a case where the spin is represented as $x_i$. If the annealing unit 10 has the self-spin that is a spin $x_i$, the spin number holding unit 107 holds i as a spin number used to identify the spin $x_i$. Then, the spin number holding unit 107 outputs the holding spin number to the spin state management unit 102 and the inverted spin candidate selection unit 50.

The spin state management unit 102 holds a current spin state of the self-spin and manages the spin state of the self-spin. For example, the spin state management unit 102 receives setting of an initial value of the spin state of the self-spin at the time when an optimum solution search process is started. Furthermore, the spin state management unit 102 acquires the spin number from the spin number holding unit 107. Then, the spin state management unit 102 outputs the spin state and the spin number to the energy change amount calculation unit 103 and the inverted spin candidate selection unit 50.

Thereafter, in any one of cases of normal single spin inversion and collective inversion, in a case where the inversion is adopted, the spin state management unit 102 receives a notification indicating confirmation of the inverted spin from the control signal generation unit 60 together with a spin number of the inverted spin. Then, in a case where the inverted spin is the self-spin, the spin state management unit 102 updates the holding spin state by setting the spin state after the inversion as the current spin state of the self-spin. Thereafter, the spin state management unit 102 outputs the holding spin state to the spin state for restoration holding unit 112.

Furthermore, even in a case where the speculative inversion is performed, the spin state management unit 102 receives the notification indicating the confirmation of the inverted spin from the control signal generation unit 60 together with the spin number of the inverted spin. Then, in a case where the self-spin is the inverted spin, the spin state management unit 102 updates the holding spin state by setting the spin state after the inversion as the current spin state of the self-spin. In this case, the spin state management unit 102 does not output the spin state to the spin state for restoration holding unit 112.

Furthermore, in a case where the collective inversion is not adopted after the speculative inversion is performed in the collective inversion, the spin state management unit 102 receives a notification indicating that the collective inversion is not adopted and a restoration instruction from the control signal generation unit 60. In that case, the spin state management unit 102 acquires the spin state of the self-spin before the speculative inversion is performed from the spin state for restoration holding unit 112. Thereafter, the spin state management unit 102 updates the holding spin state by setting the acquired spin state of the self-spin before the speculative inversion is performed as the current spin state of the self-spin, and restores the spin state.

The spin state for restoration holding unit 112 receives an input of the spin state before the self-spin is inverted from the spin state management unit 102. Then, the spin state for restoration holding unit 112 holds the spin state the speculative inversion. Thereafter, when restoring the spin state, the spin state for restoration holding unit 112 outputs the holding spin state the speculative inversion to the spin state management unit 102.

The local field management unit 101 holds information regarding a current local field and manages a local field corresponding to the self-spin. Here, because an energy change amount in a case where the self-spin is inverted can be calculated from the formula (2) based on the local field and the spin state, the local field management unit 101 holds the information regarding the local field for each annealing unit 10, in order to calculate the energy change amount by each annealing unit 10. Then, the local field management unit 101 outputs the holding local field to the energy change amount calculation unit 103.

For example, the local field management unit 101 receives setting of an initial value of the local field with respect to the self-spin at the time when the optimum solution search process is started. In addition, the local field management unit 101 may calculate the initial value of the local field with respect to the self-spin by receiving an input of the initial value of each spin. Thereafter, when the speculative inversion and the inverted spin are confirmed, the local field management unit 101 updates the holding information regarding the local field with respect to the self-spin as described later. Then, the local field management unit 101 outputs the holding information regarding the local field to the energy change amount calculation unit 103.

In either one of a case of the single spin inversion or a case of the collective inversion, in a case where the inversion is adopted, the local field management unit 101 receives a notification indicating the confirmation of the inverted spin from the control signal generation unit 60 together with the spin number of the inverted spin. Next, the local field management unit 101 calculates a change amount of the local field by using the spin number of the inverted spin of which the inversion is confirmed in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field. Moreover, the local field management unit 101 outputs the updated information regarding the current local field to the local field for restoration holding unit 111.

Furthermore, in a case where the speculative inversion is performed in the collective inversion, the local field management unit 101 receives a notification indicating confirmation of the inverted spin from the control signal generation unit 60 together with a spin number of a speculative inverted spin of which the inversion has been confirmed. Next, the local field management unit 101 calculates a change amount of the local field by using the spin number of the speculative inverted spin of which the inversion has been confirmed in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field. In this case, the local field management unit 101 does not output the information regarding the local field to the local field for restoration holding unit 111.

Furthermore, in a case where the collective inversion is not adopted after the speculative inversion is performed in a plural-bit collective inversion, the local field management unit 101 receives a notification indicating that the collective inversion is not adopted and a restoration instruction from the control signal generation unit 60. In this case, the local field management unit 101 acquires information regarding a local field before the speculative inversion is performed from the spin state for restoration holding unit 112. Thereafter, the local field management unit 101 updates the holding information regarding the local field as using the information regarding the local field before the speculative inversion is performed as information regarding a current local field.

The local field for restoration holding unit 111 receives an input of the information regarding the local field the speculative inversion from the local field management unit 101. Then, the local field for restoration holding unit 111 holds the information regarding the local field the speculative inversion. Thereafter, when restoring the local field, the local field for restoration holding unit 111 outputs the holding information regarding the local field the speculative inversion to the local field management unit 101.

The energy change amount calculation unit 103 receives an input of the information regarding the local field from the local field management unit 101. Furthermore, the energy change amount calculation unit 103 receives an input of the spin state of the self-spin from the spin state management unit 102. Then, the energy change amount calculation unit 103 calculates an amount of an energy change caused by the inversion of the self-spin by using the formula (2). Thereafter, the energy change amount calculation unit 103 outputs the calculated amount of the energy change caused by the inversion of the self-spin to the speculative inversion energy addition unit 104 and the inverted spin candidate selection unit 50.

The speculative inversion energy addition unit 104 receives an input of the amount of the energy change caused by the inversion of the self-spin from the energy change amount calculation unit 103. Furthermore, in a case where the speculative inversion is performed, the speculative inversion energy addition unit 104 receives an input of an energy change amount for the speculative inversion that is an amount of an energy change caused by the speculative inversion from an energy calculation unit 72. In a case where the speculative inversion is not performed, the speculative inversion energy addition unit 104 receives an input of zero as the energy change amount for the speculative inversion.

Then, the speculative inversion energy addition unit 104 calculates a total change amount up to this point by adding the amount of the energy change caused by the inversion of the self-spin and the energy change amount for the speculative inversion. Here, in a case of the collective inversion, a left side of the inversion determination formula expressed by the formula (6) indicates total energy when the plurality of spins is inverted. However, each annealing unit 10 calculates the amount of the energy change caused by the inversion of the self-spin. Therefore, by adding the energy change amount for the speculative inversion up to this point acquired from the energy calculation unit 72 to the amount of the energy change caused by the inversion of the self-spin, it is possible to calculate an energy change amount up to that point in a case where the self-spin is speculatively inverted.

The speculative inversion energy addition unit 104 outputs the energy change amount that is an addition result to the inversion determination formula evaluation unit 105. In a case where the speculative inversion is performed, the addition result is the energy change amount for the speculative inversion in a case where the inversion of the self-spin is added to the speculative inversion up to that point. Furthermore, in a case where the speculative inversion is not performed, the speculative inversion energy addition unit 104 adds zero to the amount of the energy change caused by the inversion of the self-spin, and the addition result coincides with the amount of the energy change caused by the inversion of the self-spin.

The inversion determination formula evaluation unit 105 receives an input of the energy change amount from the speculative inversion energy addition unit 104. Moreover, the inversion determination formula evaluation unit 105 receives an input of a value on the right side of the inversion determination formula expressed by the formula (6) from the threshold generation unit 30. Then, the inversion determination formula evaluation unit 105 determines whether or not the energy change amount satisfies the inversion determination formula using the value acquired from the threshold generation unit 30 as the right side of the formula (6). Then, the inversion determination formula evaluation unit 105 outputs the determination result indicating whether or not the energy change amount satisfies the inversion determination formula to the determination unit 106.

In a case of the collective inversion, the inversion determination formula evaluation unit 105 evaluates the inversion determination formula by using a total amount of the energy change caused by the speculative inversion for the plurality of spins. For example, in a case where the speculative inversion is performed on N spins, the inversion determination formula evaluation unit 105 evaluates the inversion determination formula by using the following formula (7). Here, the reference $\Delta E_i$ represents an energy change amount when an i-th speculative inverted spin is inverted.

$$\Delta E_1 + \Delta E_2 + ... \Delta E_{N-1} + \Delta E_N < T \times \log (1/r) ... (7)$$

The spin attribute holding unit 108 holds a spin attribute of the self-spin. The spin attribute is a value determined from constraint conditions of a problem to be solved. The spin attribute includes a spin type and an attribute in the type. For example, the spin attribute includes information indicating whether or not the spin is a spin to be collectively inverted, how many spins are speculatively inverted, under what conditions the subsequent spin during speculative inversion is selected, or the like. Then, the spin attribute holding unit 108 outputs the holding information regarding the spin attribute of the self-spin to the determination unit 106 and the inverted spin candidate selection unit 50.

The determination unit 106 receives an input of the determination result indicating whether or not the energy change amount satisfies the inversion determination formula from the inversion determination formula evaluation unit 105. Moreover, the determination unit 106 receives an input of a reading condition from the control signal generation unit 60. Here, the reading condition is information used to determine a spin that is to be a pair of the spin on which the speculative inversion has been performed and is a target of the collective inversion and is generated from spin information including each piece of information of the spin state, the spin attribute, and the spin number of the spin that has been speculatively inverted. In a case where the speculative inversion is not performed, the reading condition is unconditional.

Because the reading condition is unconditional in a case where the speculative inversion is not performed, the determination unit 106 generates an inversion candidate flag indicating that the self-spin is an inversion candidate if the energy change amount satisfies the inversion determination formula and outputs the generated flag to the inverted spin candidate selection unit 50. If the energy change amount does not satisfy the inversion determination formula, the determination unit 106 generates an inversion candidate flag indicating that the self-spin is not an inversion candidate and outputs the generated flag to the inverted spin candidate selection unit 50. For example, when it is assumed that the inversion candidate flag be F, the determination unit 106 sets a value of F to one in a case where the flag indicates that the self-spin is an inversion candidate and sets the value of F to zero in a case where the flag indicates that the self-spin is not an inversion candidate.

In a case where the speculative inversion is performed, the determination unit 106 acquires the information regarding the spin attribute of the self-spin from the spin attribute holding unit 108. Then, the determination unit 106 determines whether or not the self-spin satisfies the reading condition by using the spin attribute of the self-spin. The determination whether or not the reading condition is satisfied includes determination whether or not the energy change amount satisfies the inversion determination formula made by using the inversion candidate flag. In a case where the self-spin satisfies the reading condition, the determination unit 106 generates the inversion candidate flag indicating that the self-spin is an inversion candidate and outputs the generated flag to the inverted spin candidate selection unit 50. On the other hand, in a case where the self-spin does not satisfy the reading condition, the determination unit 106 generates the inversion candidate flag indicating that the self-spin is not an inversion candidate and outputs the generated flag to the inverted spin candidate selection unit 50. Moreover, the determination unit 106 outputs, to the inverted spin candidate selection unit 50, information indicating whether or not the self-spin is a spin to be collectively inverted and information regarding collective inversion control indicating how many spins are collectively inverted.

Returning to FIG. 1, the description will be continued. The inverted spin candidate selection unit 50 receives inputs of the spin attribute, the spin state, the energy change amount, and the inversion candidate flag from the annealing unit 10 together with the spin number of the self-spin in each annealing unit 10.

Then, the inverted spin candidate selection unit 50 selects the inversion candidate spin from among the spin numbers acquired from the respective annealing units 10 according to the random number value input from the random number generation unit 40. Thereafter, the inverted spin candidate selection unit 50 outputs the spin attribute, the spin state, and the inversion candidate flag to the control signal generation unit 60 together with the spin number of the selected inversion candidate spin. Furthermore, the inverted spin candidate selection unit 50 outputs the amount of the energy change caused by inverting the inversion candidate spin to the energy management unit 70.

Here, in a case where the collective inversion is performed, the inverted spin candidate selection unit 50 receives, from the determination unit 106, the input of the information indicating whether or not the self-spin is the spin to be collectively inverted and the information regarding the collective inversion control indicating how many spins are collectively inverted. Then, the inverted spin candidate selection unit 50 proceeds a tournament to select an inverted spin candidate by using the acquired information. Here, because the reading condition is set so as to select a specific spin and a spin not to be selected is set so as to not to be flagged before entering the inverted spin candidate selection unit 50, the inverted spin candidate selection unit 50 can preferentially select a spin to be collectively inverted.

As illustrated in FIG. 1, the control signal generation unit 60 includes an inverted spin confirmation unit 61, a speculative inversion control unit 62, a spin information holding unit 63, and a reading condition generation unit 64. The control signal generation unit 60 receives inputs of a spin number, a spin attribute, a spin state, and an inversion candidate flag of the inversion candidate spin from the inverted spin candidate selection unit 50.

The speculative inversion control unit 62 determines whether or not the inversion candidate spin is a spin to be collectively inverted from the spin attribute of the inversion candidate spin. In a case where the inversion candidate spin is not the spin to be collectively inverted, the speculative inversion control unit 62 outputs a request for inversion adoption determination to the inverted spin confirmation unit 61.

On the other hand, in a case where the inversion candidate spin is a spin to be collectively inverted, the speculative inversion control unit 62 determines whether or not the inversion candidate spin is an adoption inversion target spin in the collective inversion. In a case where the inversion candidate spin is not the adoption inversion target spin, the speculative inversion control unit 62 instructs the inverted spin confirmation unit 61 to confirm the inverted spin in the speculative inversion. Whereas, in a case where the inversion candidate spin is the adoption inversion target spin, the speculative inversion control unit 62 outputs a request for inversion adoption determination of the collective inversion to the inverted spin confirmation unit 61.

When receiving the request for inversion adoption determination from the speculative inversion control unit 62, the inverted spin confirmation unit 61 checks the inversion candidate flag of the inversion candidate spin and determines whether or not to adopt the inversion of the inversion candidate spin. In a case where the value of the inversion candidate flag indicates that the spin to be inverted is an inversion candidate, the inverted spin confirmation unit 61 determines to adopt to invert the inversion candidate spin. Then, the inverted spin confirmation unit 61 confirms the inversion candidate spin as the inverted spin. Thereafter, the inverted spin confirmation unit 61 notifies the energy management unit 70 of the confirmation of the inverted spin. Furthermore, the inverted spin confirmation unit 61 notifies each annealing unit 10 of the confirmation of the inverted spin together with the spin number of the inverted spin. Moreover, the inverted spin confirmation unit 61 notifies the spin information holding unit 63 and the reading condition generation unit 64 of clearing of the spin information and the reading condition.

On the other hand, in a case where the value of the inversion candidate flag indicates that the spin to be inverted is not an inversion candidate, the inverted spin confirmation unit 61 determines not to adopt the inversion candidate spin. Then, the inverted spin confirmation unit 61 notifies the spin information holding unit 63 and the reading condition generation unit 64 of that the inversion candidate spin is not adopted.

Furthermore, when receiving an instruction to confirm the inverted spin in the speculative inversion from the speculative inversion control unit 62, the inverted spin confirmation unit 61 confirms the inversion candidate spin as an inverted spin. Then, the inverted spin confirmation unit 61 notifies the energy management unit 70 of the confirmation of the inverted spin in the speculative inversion. Furthermore, the inverted spin confirmation unit 61 notifies each annealing unit 10 of the confirmation of the inverted spin together with the spin number of the speculative inverted spin. As a result, the inversion candidate spin is inverted regardless of the evaluation result of an energy increase amount, and the speculative inversion is performed. Moreover, the inverted spin confirmation unit 61 outputs spin information including the spin number, the spin attribute, and the spin state of the speculative inverted spin to the spin information holding unit 63. Furthermore, the inverted spin confirmation unit 61 instructs the reading condition generation unit 64 to generate the reading condition.

Furthermore, when receiving a request for inversion adoption determination in the collective inversion from the speculative inversion control unit 62, the inverted spin confirmation unit 61 checks the inversion candidate flag of the inversion candidate spin and determines whether or not to adopt the collective inversion. In a case where the value of the inversion candidate flag indicates that the spin to be inverted is an inversion candidate, the inverted spin confirmation unit 61 determines to adopt to invert the inversion candidate spin. Then, the inverted spin confirmation unit 61 confirms the inversion candidate spin as the inverted spin. Thereafter, the inverted spin confirmation unit 61 notifies the energy management unit 70 of the confirmation of the inverted spin. Furthermore, the inverted spin confirmation unit 61 notifies each annealing unit 10 of the confirmation of the inverted spin together with the spin number of the inverted spin. Moreover, the inverted spin confirmation unit 61 notifies the spin information holding unit 63 and the reading condition generation unit 64 of the adoption of the collective inversion.

On the other hand, in a case where the value of the inversion candidate flag indicates that the spin to be inverted is not an inversion candidate, the inverted spin confirmation unit 61 determines not to adopt the collective inversion. Then, the inverted spin confirmation unit 61 notifies the spin information holding unit 63, the reading condition generation unit 64, and the energy management unit 70 of that the collective inversion is not adopted. Moreover, the inverted spin confirmation unit 61 notifies each annealing unit 10 of the notification indicating that the collective inversion is not adopted, the spin state, and the local field restoration instruction. This inverted spin confirmation unit 61 is an example of an "adoption determination unit".

The spin information holding unit 63 receives, from the inverted spin confirmation unit 61, an input of the spin information including the spin number, the spin attribute, and the spin state of the spin that has been speculatively inverted. Then, the spin information holding unit 63 stores and saves the acquired spin information of the spin that has been speculatively inverted. The spin information holding unit 63 sequentially and additionally stores the spin information of the inverted spin each time when the speculative inversion is repeatedly performed.

Furthermore, the spin information holding unit 63 receives a notification indicating that the inversion is adopted or is not adopted. Then, in a case of holding the spin information, the spin information holding unit 63 clears the holding spin information. Furthermore, in a case of receiving the notification indicating that the collective inversion is not adopted, the spin information holding unit 63 clears the holding spin information.

In a case where the speculative inversion is performed, the reading condition generation unit 64 receives an instruction to generate the reading condition from the inverted spin confirmation unit 61. In this case, the reading condition generation unit 64 acquires the spin information of each spin on which the speculative inversion has been performed from the spin information holding unit 63. Then, the reading condition generation unit 64 generates a reading condition including information that enables to select a spin from among the spins to be collectively inverted including the spin that has been speculatively inverted while excluding the spin that has been already selected, by using the acquired spin information. Thereafter, while holding the generated reading condition, the reading condition generation unit 64 outputs the generated reading condition to the determination unit 106 of the annealing unit 10.

The reading condition generation unit 64 receives a notification indicating that the inversion is adopted or not adopted. In this case, in a case where the holding reading condition exists, the reading condition generation unit 64 clears the holding reading condition. Furthermore, the reading condition generation unit 64 clears the holding reading condition in a case of receiving the notification indicating that the collective inversion is not adopted.

The energy management unit 70 calculates energy according to the spin state. The energy management unit 70 includes an energy for speculative inversion calculation unit 71 and the energy calculation unit 72.

The energy calculation unit 72 has an initial value of each spin in advance. For example, the initial value may be set to zero for all the spin states, or an appropriate spin state of each spin may be set in advance according to the calculation. The energy calculation unit 72 obtains energy in an initial state by using the initial value of each spin in the formula (1) and holds the obtained energy. Furthermore, the energy calculation unit 72 receives an input of the spin number of the inversion candidate spin from the inverted spin candidate selection unit 50. Moreover, the energy calculation unit 72 acquires an energy change amount in a case where the spin state of the inverted spin input from the inverted spin candidate selection unit 50 is inverted.

Thereafter, in a case where the inversion is confirmed in the inversion of the single spin, the energy calculation unit 72 receives a notification indicating the confirmation of the inverted spin from the inverted spin confirmation unit 61. The energy calculation unit 72 inverts a spin state of the spin having the spin number notified from the inverted spin candidate selection unit 50 from among the spin states of the respective spins held by the energy calculation unit 72. Furthermore, the energy calculation unit 72 adds the energy change amount input from the inverted spin candidate selection unit 50 to the current energy held by the energy calculation unit 72 and calculates energy in a case where the spin state of the inverted spin is inverted. Thereafter, the energy calculation unit 72 holds the spin state of each spin in a state where the spin state of the inverted spin is inverted. Moreover, the energy calculation unit 72 outputs the spin state of each spin in a state where the spin state of the inverted spin is inverted and the calculated energy to the search result holding unit 80. Moreover, the energy calculation unit 72 instructs the energy for speculative inversion calculation unit 71 to clear the information regarding the energy for speculative inversion.

Furthermore, in a case where the inversion of the adoption determination target is confirmed in the collective inversion, the energy calculation unit 72 receives a notification indicating the confirmation of the inverted spin from the inverted spin confirmation unit 61. Next, the energy calculation unit 72 acquires the spin state of each spin, to which the speculative inversion up to that point is added, from the energy for speculative inversion calculation unit 71. Then, the energy calculation unit 72 inverts the spin state of the spin having the spin number notified from the inverted spin candidate selection unit 50 from among the acquired spin states of the respective spins. Furthermore, the energy calculation unit 72 adds the energy change amount input from the inverted spin candidate selection unit 50 to the current energy held by the energy calculation unit 72 and calculates energy in a case where the spin state of the inverted spin is inverted. Thereafter, the energy calculation unit 72 holds the spin state of each spin in a state where the spin state of each spin to be collectively inverted is inverted. Moreover, the energy calculation unit 72 outputs the spin state of each spin in a state where the spin state of each spin to be collectively inverted is inverted and the calculated energy to the search result holding unit 80. Moreover, the energy calculation unit 72 instructs the energy for speculative inversion calculation unit 71 to clear information for the speculative inversion.

In a case where the speculative inversion is performed in the collective inversion, the energy for speculative inversion calculation unit 71 receives a notification indicating the confirmation of the inverted spin in the speculative inversion from the inverted spin confirmation unit 61. Moreover, the energy for speculative inversion calculation unit 71 acquires the spin information of the speculative inverted spin input from the inverted spin candidate selection unit 50. Moreover, in a case of first speculative inversion in the collective inversion, the energy for speculative inversion calculation unit 71 acquires the spin state of each spin from the energy calculation unit 72.

The energy for speculative inversion calculation unit 71 acquires the energy change amount in a case where the spin state of the spin having the spin number notified from the inverted spin candidate selection unit 50 is inverted from the inverted spin candidate selection unit 50. In a case of the first speculative inversion, the energy for speculative inversion calculation unit 71 sets the acquired energy change amount as the energy change amount for the speculative inversion. On the other hand, in a case where the energy change amount for the speculative inversion has been already calculated, the energy for speculative inversion calculation unit 71 adds the acquired energy change amount to the holding energy change amount for the speculative inversion and sets the addition result as the energy change amount for the speculative inversion. Thereafter, the energy for speculative inversion calculation unit 71 outputs the calculated energy change amount for the speculative inversion to each annealing unit 10. Moreover, the energy for speculative inversion calculation unit 71 stores the spin state of each spin in a case where the spin state of the spin having the spin number notified from the inverted spin confirmation unit 61 is inverted, in the holding spin state of each spin.

Thereafter, in a case where the inversion of the adoption determination target is confirmed in the collective inversion, the energy for speculative inversion calculation unit 71 notifies the energy calculation unit 72 of the information regarding the spin state of each spin to which the speculative inversion up to that time is added. Thereafter, the energy for speculative inversion calculation unit 71 receives an instruction to clear the information for the speculative inversion from the energy calculation unit 72. Then, the energy for speculative inversion calculation unit 71 clears the stored energy change amount for the speculative inversion and the information regarding the spin state of each spin to which the speculative inversion is added.

In a case where the inverted spin is confirmed, the search result holding unit 80 receives inputs of the spin state of each spin and the information regarding the calculated energy from the energy management unit 70. In a case where minimum energy is not held, the search result holding unit 80 sets the acquired energy as the minimum energy. In this case, the search result holding unit 80 holds the spin information of each spin in a case where the acquired energy is set as the minimum energy.

On the other hand, in a case where the minimum energy has been already held, the search result holding unit 80 compares the acquired energy with the holding minimum energy. In a case where the acquired energy is less than the minimum energy, the search result holding unit 80 sets the acquired energy as the minimum energy. Moreover, the search result holding unit 80 holds the spin state of each spin in a case where the acquired energy is the minimum energy as a spin state with the minimum energy. In a case where the acquired energy is equal to or more than the minimum energy, the search result holding unit 80 holds the holding minimum energy. Furthermore, the search result holding unit 80 holds the spin state of each spin in a case where the holding minimum energy is used. The search result holding unit 80 corresponds to an example of a "search unit".

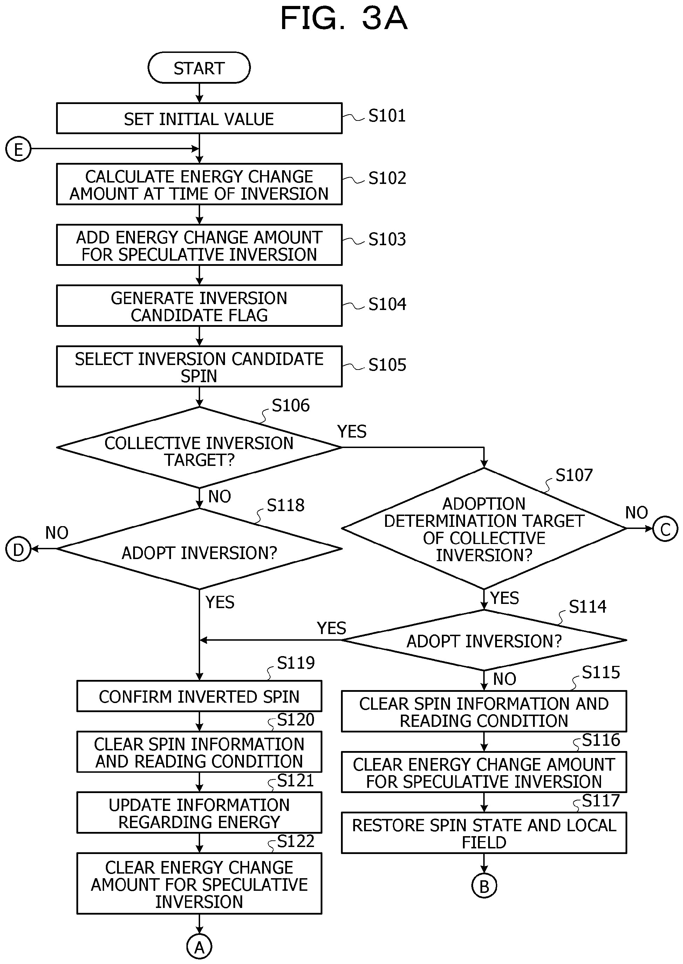

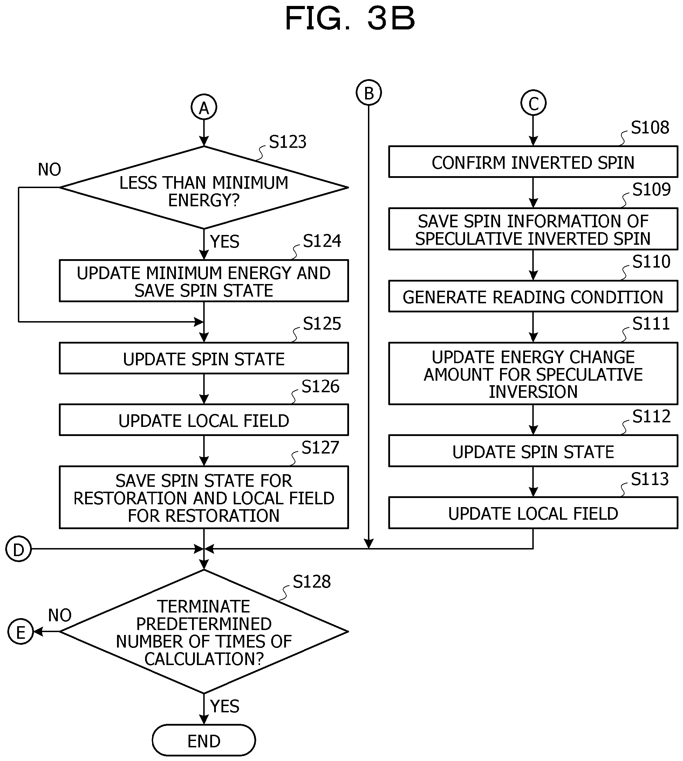

Next, a flow of an optimum solution search process by the Ising calculation device 1 according to the present embodiment will be described with reference to FIG. 3A and 3B. FIG. 3A and 3B are a flowchart of an optimum solution search process by the Ising calculation device according to the first embodiment.

The Ising calculation device 1 sets an initial value in each unit on the basis of, for example, information input by an operator by using an external terminal (not illustrated) or the like (step S101). For example, the spin state management unit 102 of each annealing unit 10 sets an initial value of a spin state of a self-spin. Furthermore, the spin number holding unit 107 sets a spin number of the self-spin. Furthermore, the local field management unit 101 sets an initial value of a local field for the self-spin. Furthermore, the spin attribute holding unit 108 sets a spin attribute of the self-spin. Furthermore, an initial value of each spin is input to the energy calculation unit 72. Moreover, the energy change amount for the speculative inversion and the spin state of each spin held by the energy for speculative inversion calculation unit 71, the spin information held by the spin information holding unit 63, and the reading condition held by the reading condition generation unit 64 are cleared.

Next, the energy change amount calculation unit 103 of the annealing unit 10 acquires the information regarding the local field held by the local field management unit 101. Furthermore, the energy change amount calculation unit 103 receives the input of the spin state of the inverted self-spin from the spin state management unit 102. Then, the energy change amount calculation unit 103 calculates the energy change amount, at the time when the self-spin is inverted, using the formula (2) (step S102). Thereafter, the energy change amount calculation unit 103 outputs the calculated energy change amount at the time when the self-spin is inverted to the speculative inversion energy addition unit 104.

The speculative inversion energy addition unit 104 receives the input of the energy change amount at the time when the self-spin is inverted from the energy change amount calculation unit 103. Next, in a case where the speculative inversion is performed, the speculative inversion energy addition unit 104 acquires the energy change amount for the speculative inversion caused by the speculative inversion that has been already performed from the energy calculation unit 72. In a case where the speculative inversion is not performed, the energy change amount for the speculative inversion acquired from the energy management unit 70 is zero. Then, the speculative inversion energy addition unit 104 adds the acquired energy change amount at the time when the self-spin is inverted to the energy change amount for the speculative inversion (step S103). Thereafter, the speculative inversion energy addition unit 104 outputs the energy change amount that is the addition result to the inversion determination formula evaluation unit 105.

The inversion determination formula evaluation unit 105 receives an input of the energy change amount from the speculative inversion energy addition unit 104. Furthermore, the inversion determination formula evaluation unit 105 receives the input of the value on the right side of the formula (6) to be a threshold from the threshold generation unit 30. Then, the inversion determination formula evaluation unit 105 determines whether or not the acquired energy change amount satisfies the inversion determination formula using the value acquired from the threshold generation unit 30 as the right side of the formula (6). Thereafter, the inversion determination formula evaluation unit 105 outputs the determination result indicating whether or not the energy change amount satisfies the inversion determination formula to the determination unit 106. The determination unit 106 receives an input of the determination result indicating whether or not the energy change amount satisfies the inversion determination formula from the inversion determination formula evaluation unit 105. Moreover, the determination unit 106 receives an input of a reading condition from the control signal generation unit 60. Furthermore, the determination unit 106 acquires the information regarding the spin attribute of the self-spin from the spin attribute holding unit 108. Then, in a case where the self-spin satisfies the reading condition, the determination unit 106 generates an inversion candidate flag indicating that the self-spin is an inversion candidate. On the other hand, in a case where the self-spin does not satisfy the reading condition, the determination unit 106 generates an inversion candidate flag indicating that the self-spin is not an inversion candidate (step S104). Thereafter, the determination unit 106 outputs the generated inversion candidate flag to the inverted spin candidate selection unit 50.

The inverted spin candidate selection unit 50 receives inputs of the spin attribute, the spin state, the energy change amount, and the inversion candidate flag from the annealing unit 10 together with the spin number of the self-spin in each annealing unit 10. Then, the inverted spin candidate selection unit 50 selects the inversion candidate spin from among the spin numbers acquired from the respective annealing units 10 according to the random number value input from the random number generation unit 40 (step S105). Thereafter, the inverted spin candidate selection unit 50 outputs the spin attribute, the spin state, and the inversion candidate flag to the control signal generation unit 60 together with the spin number of the inversion candidate spin.

The control signal generation unit 60 receives inputs of the spin number, the spin attribute, the spin state, and the inversion candidate flag of the inversion candidate spin from the inverted spin candidate selection unit 50. Then, the speculative inversion control unit 62 determines whether or not the inversion candidate spin is a spin to be collectively inverted from the spin attribute of the inversion candidate spin (step S106).

In a case where the inversion candidate spin is a spin to be collectively inverted (step S106: Yes), the speculative inversion control unit 62 determines whether or not the inversion candidate spin is an adoption inversion target spin in the collective inversion (step S107).

In a case where the inversion candidate spin is not the adoption inversion target spin (step S107: No), the speculative inversion control unit 62 instructs the inverted spin confirmation unit 61 to confirm the inverted spin in the speculative inversion. Upon receiving the instruction to confirm the inverted spin in the speculative inversion, the inverted spin confirmation unit 61 confirms the inversion candidate spin as an inverted spin (step S108). Thereafter, the inverted spin confirmation unit 109 notifies the energy management unit 70 of the confirmation of the inverted spin in the speculative inversion. Furthermore, the inverted spin confirmation unit 61 notifies each annealing unit 10 of the confirmation of the inverted spin together with the spin number of the speculative inverted spin. Moreover, the inverted spin confirmation unit 61 outputs spin information including the spin number, the spin attribute, and the spin state of the speculative inverted spin to the spin information holding unit 63. Furthermore, the inverted spin confirmation unit 61 instructs the reading condition generation unit 64 to generate the reading condition.

The spin information holding unit 63 receives an input of the spin information of the speculative inverted spin from the inverted spin confirmation unit 61. Then, the spin information holding unit 63 saves the spin information of the speculative inverted spin (step S109).

Upon receiving the instruction to generate the reading condition, the reading condition generation unit 64 acquires the spin information of each spin on which the speculative inversion has been performed from the spin information holding unit 63. Then, the reading condition generation unit 64 generates the reading condition by using the acquired spin information (step S110).

The energy for speculative inversion calculation unit 71 of the energy management unit 70 receives a notification indicating the confirmation of the inverted spin in the speculative inversion. Furthermore, the energy for speculative inversion calculation unit 71 acquires the energy change amount in a case where the spin state of the inverted spin is inverted from the inverted spin candidate selection unit 50. Then, the energy management unit 70 updates the holding energy change amount for the speculative inversion by setting an amount obtained by adding the energy change amount to the holding energy change amount for the speculative inversion as the energy change amount for the speculative inversion (step S111). Moreover, the energy for speculative inversion calculation unit 71 stores the spin state of each spin in a case where the spin state of the spin having the spin number notified from the inverted spin confirmation unit 61 is inverted, in the holding spin state of each spin.

The annealing unit 10 receives the inputs of the spin number of the speculative inverted spin and the confirmation of the inverted spin from the inverted spin confirmation unit 109. In a case where the self-spin is the speculative inverted spin confirmed to be inverted, the spin state management unit 102 updates the spin state (step S112).

The local field management unit 101 calculates a change amount of the local field by using the spin number of the inverted spin confirmed to be inverted in the formula (4). Then, the local field management unit 101 calculates the local field with respect to the self-spin by using the calculated change amount of the local field for the holding information regarding the local field. Thereafter, the local field management unit 101 updates the holding information regarding the local field using the information regarding the calculated local field as information regarding the current local field (step S113). Thereafter, the optimum solution search process proceeds to step S128.

Whereas, in a case where the inversion candidate spin is the adoption inversion target spin (step S107: Yes), the speculative inversion control unit 62 outputs a request for inversion adoption determination of the collective inversion to the inverted spin confirmation unit 61. Upon receiving the request for inversion adoption determination of the collective inversion, the inverted spin confirmation unit 61 checks the inversion candidate flag of the inversion candidate spin and determines whether or not to adopt the collective inversion (step S114). In a case where the collective inversion is adopted (step S114: Yes), the optimum solution search process proceeds to step S119.

On the other hand, in a case where the collective inversion is not adopted (step S114: No), the spin information holding unit 63, the reading condition generation unit 64, and the energy management unit 70 are notified of that the collective inversion is not adopted. Furthermore, the inverted spin confirmation unit 61 notifies each annealing unit 10 of the notification indicating that the collective inversion is not adopted and a spin state and local field restoration instruction. When receiving the notification indicating that the collective inversion is not adopted, the spin information holding unit 63 clears the holding spin information. Furthermore, the reading condition generation unit 64 clears the holding reading condition upon receiving the notification indicating that the collective inversion is not adopted (step S115).

Furthermore, when receiving the notification indicating that the collective inversion is not adopted, the energy for speculative inversion calculation unit 71 of the energy management unit 70 clears the holding energy change amount for the speculative inversion (step S116).

Furthermore, each annealing unit 10 receives the notification indicating that the collective inversion is not adopted and the spin state and local field restoration instruction from the inverted spin confirmation unit 61. Then, in a case where the self-spin is a spin to be collectively inverted, the spin state management unit 102 acquires the spin state from the spin state for restoration holding unit 112 and restores the spin state by setting the acquired spin state as the current spin state of the self-spin. Furthermore, the local field management unit 101 acquires the information regarding the local field from the local field for restoration holding unit 111 and restores the local field using the acquired information regarding the local field as information regarding the current local field corresponding to the self-spin (step S117).

On the other hand, in a case where the inversion candidate spin is a spin that is not to be collectively inverted (step S106: No), the speculative inversion control unit 62 outputs the request for inversion adoption determination to the inverted spin confirmation unit 61. When receiving the request for inversion adoption determination from the speculative inversion control unit 62, the inversion candidate flag of the inversion candidate spin is checked, and it is determined whether or not to adopt the inversion of the inversion candidate spin (step S118). In a case where the inversion of the inversion candidate spin is not adopted (step S118: No), the optimum solution search process proceeds to step S128.

In a case where the collective inversion is adopted (step S114: Yes) and in a case where the inversion of the inversion candidate spin is adopted (step S118: Yes), the inverted spin confirmation unit 61 confirms the inversion candidate spin as an inverted spin (step S119). Then, the inverted spin confirmation unit 61 notifies the energy management unit 70 of the confirmation of the inverted spin. Furthermore, the inverted spin confirmation unit 61 notifies each annealing unit 10 of the confirmation of the inverted spin together with the spin number of the inverted spin. Moreover, the inverted spin confirmation unit 61 notifies the spin information holding unit 63 and the reading condition generation unit 64 of the adoption of the inversion.

When receiving the notification indicating that the collective inversion is adopted, the spin information holding unit 63 clears the holding spin information. Furthermore, the reading condition generation unit 64 clears the holding reading condition when receiving the notification indicating that the collective inversion is adopted (step S120).

Upon receiving the notification indicating the confirmation of the inverted spin, the energy calculation unit 72 of the energy management unit 70 acquires the spin state of each spin to which the speculative inversion up to this point is added from the energy for speculative inversion calculation unit 71. Then, the energy calculation unit 72 inverts the spin state of the spin having the spin number acquired from the inverted spin candidate selection unit 50 in the spin state of each spin to which the speculative inversion up to this point is added. Furthermore, the energy calculation unit 72 adds the energy change amount input from the inverted spin candidate selection unit 50 to the current energy held by the energy calculation unit 72 and calculates energy in a case where the spin state of the inverted spin is inverted. Here, because the spin information is not received from the energy for speculative inversion calculation unit 71 in a case where the speculative inversion is not performed, the energy calculation unit 72 inverts the spin state of the spin having the spin number acquired from the inverted spin candidate selection unit 50 in the spin state of each spin of the energy calculation unit 72 . Furthermore, the energy calculation unit 72 adds the energy change amount input from the inverted spin candidate selection unit 50 to the current energy held by the energy calculation unit 72 and calculates energy in a case where the spin state of the inverted spin is inverted. Thereafter, the energy calculation unit 72 updates the spin state of each spin and the holding information regarding the energy (step S121).

Next, the energy calculation unit 72 instructs the energy for speculative inversion calculation unit 71 to clear the energy change amount for the speculative inversion. Upon receiving the instruction from the energy calculation unit 72, the energy for speculative inversion calculation unit 71 clears the holding energy change amount for the speculative inversion (step S122).

Moreover, the energy calculation unit 72 outputs the information regarding the calculated energy and the spin state of each spin to the search result holding unit 80. The search result holding unit 80 determines whether or not the energy acquired from the energy calculation unit 72 is less than the holding minimum energy (step S123). In a case where the energy acquired from the energy calculation unit 72 is equal to or more than the holding minimum energy (step S123: No), the optimum solution search process proceeds to step S125.

On the other hand, in a case where the energy acquired from the energy calculation unit 72 is less than the holding minimum energy (step S123: Yes), the search result holding unit 80 updates the holding minimum energy by setting the energy acquired from the energy calculation unit 72 as the minimum energy. Moreover, the search result holding unit 80 saves the spin state of each spin acquired from the energy calculation unit 72 as the spin state in a case of the minimum energy (step S124).

The annealing unit 10 receives the input of the confirmation of the inverted spin from the inverted spin confirmation unit 109 together with the spin number of the inverted spin. In a case where the self-spin is the inverted spin confirmed to be inverted, the spin state management unit 102 updates the spin state (step S125).

The local field management unit 101 calculates a change amount of the local field by using the spin number of the inverted spin confirmed to be inverted in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field (step S126).

Thereafter, the spin state for restoration holding unit 112 saves the spin state held by the spin state management unit 102. Furthermore, the local field for restoration holding unit 111 saves the information regarding the local field held by the local field management unit 101 (step S127).

Thereafter, the search result holding unit 80 determines whether or not the predetermined number of times of calculation is terminated (step S128). In a case where the predetermined number of times of calculation is not terminated (step S128: No), the optimum solution search process returns to step S102. On the other hand, in a case where the predetermined number of times of calculation is terminated (step S128: Yes), the search result holding unit 80 determines a spin state with the minimum energy at that time as an optimum solution and terminates the optimum solution search process.

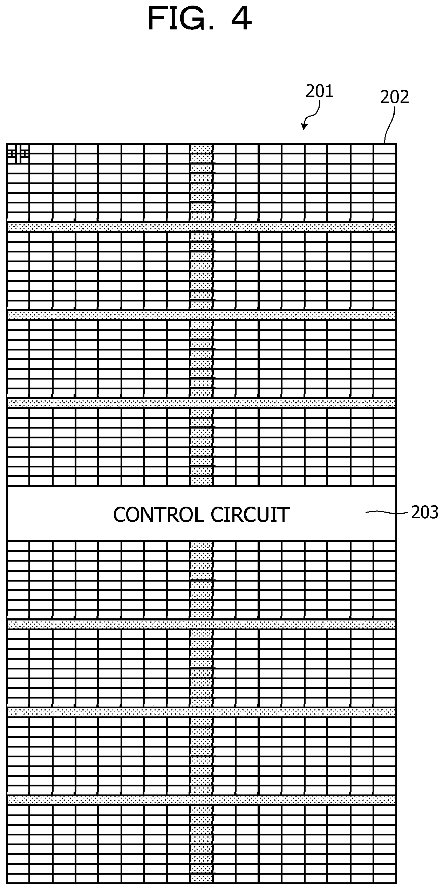

FIG. 4 is an arrangement configuration diagram of the Ising calculation device. The Ising calculation device 1 according to the present embodiment corresponds to an annealing circuit 201 in FIG. 4. The annealing circuit 201 is a functional unit that can perform annealing. Each annealing circuit 201 includes a plurality of unit circuits 202 and a control circuit 203. For example, 1024 unit circuits 202 are mounted on the single annealing circuit 201. The unit circuit 202 is a unit of logic and implementation for single spin determination and state management and corresponds to the annealing unit 10. Furthermore, the control circuit 203 is a circuit that performs control in the annealing circuit 201 and corresponds to the control signal generation unit 60, the energy management unit 70, the search result holding unit 80, or the like. For example, when any one of self-spins in charge of the respective unit circuits 202 is selected as an inversion candidate spin, the control circuit 203 adopts the inversion candidate spin, and the inverted spin is confirmed, a notification is issued to the unit circuit 202.

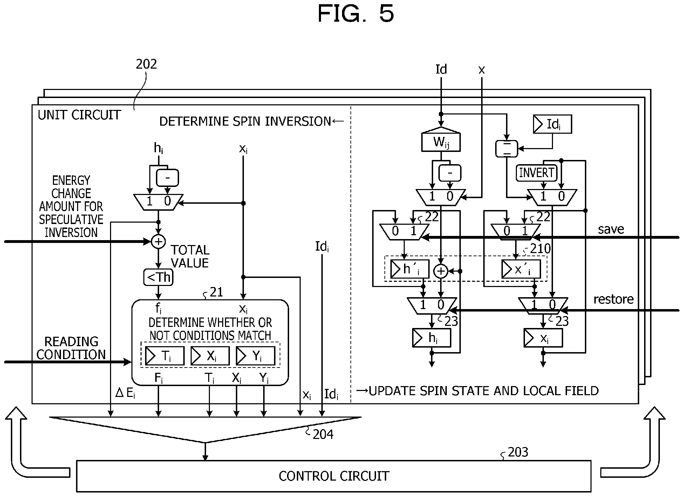

Furthermore, FIG. 5 is a diagram of a circuit image of the unit circuit. A selection circuit 204 illustrated in FIG. 5 corresponds to an example of the inverted spin candidate selection unit 50 and proceeds a tournament to select a spin using the information input from each unit circuit 202. The control circuit 203 inverts or restores the spin state and creates a reading condition to be a spin selection condition on the basis of the information regarding the spin selected by the selection circuit 204, for example.

A circuit illustrated as a side that determines spin inversion among the unit circuits 202 executes a process for calculating the local field by the local field management unit 101 and processes by the energy change amount calculation unit 103, the speculative inversion energy addition unit 104, the inversion determination formula evaluation unit 105, and the determination unit 106. To the side that determines the spin inversion of the unit circuit 202, the energy change amount for the speculative inversion up to that point is input by the control circuit 203, and an energy change amount caused by the next inversion is added, and a total value is calculated. Furthermore, a circuit 21 that determines condition match determines whether or not conditions match on the basis of the input of the reading condition.

Furthermore, a circuit on a side that updates the spin state and the local field among the unit circuits 202 is a circuit that outputs information used to generate data to be transmitted to a spin inversion determination circuit using the information regarding the inverted spin input from the control circuit 203. In this case, a Random Access Memory (RAM) 210 for data holding is mounted. At the time when the inverted spin is confirmed, a save signal is input to the selection circuit 22. In that case, the selection circuit 22 selects a value of a path that takes a value of one, for example, the output value of the local field. Furthermore, a selection circuit 23 selects a value of a path that takes a value of zero, for example, a value of the current local field. At the time of restoration, a restore signal is input to the selection circuit 23. The selection circuit 23 selects a value of a path that takes a value of one, for example, a value of the local field for restoration. Furthermore, the selection circuit 22 selects a value of a path that takes a value of zero, for example, a value of the local field for restoration. The RAM 210 corresponds to an example of the local field for restoration holding unit 111 and the spin state for restoration holding unit 112.

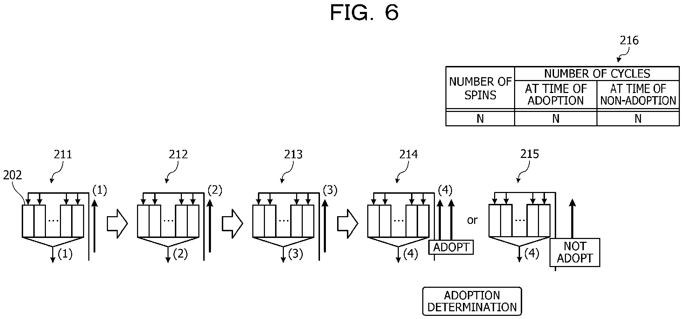

Moreover, an operation of the Ising calculation device 1 according to the present embodiment at the time when the optimum solution search process is executed will be described with reference to FIG. 6. FIG. 6 is a diagram of an operation image at the time when the Ising calculation device according to the first embodiment executes the optimum solution search process. Here, a case where four spins are collectively inverted will be described. Here, (1) to (4) in FIG. 6 represent spin numbers of speculative inverted spins that are read in the N (N = 1, 2, 3, 4)-th order.

In a case where the collective inversion is performed, as indicated in a state 211, the first spin in the collective inversion is selected, and the control circuit 203 sends confirmation of the inverted spin with respect to the first spin to the unit circuit 202. Next, as indicated in a state 212, the second spin is selected, and the control circuit 203 sends confirmation of the inverted spin with respect to the second spin to the unit circuit 202. Next, as indicated in a state 213, the third spin is selected, and the control circuit 203 sends confirmation of the inverted spin with respect to the third spin to the unit circuit 202. Thereafter, the control circuit 203 adopts the collective inversion at the time when the fourth spin is selected. In a case where the collective inversion is adopted, as indicated in a state 214, the control circuit 203 sends confirmation of the inverted spin with respect to the fourth spin to the unit circuit 202, and the spin state and the local field are updated. On the other hand, in a case where the collective inversion is not adopted, as indicated in a state 215, the control circuit 203 sends that the collective inversion is not adopted to the unit circuit 202. Then, each unit circuit 202 restores the spin state and the local field to the state before the speculative inversion is performed. In this case, regardless of whether the collective inversion is adopted or not adopted, the number of cycles to be performed is the same. For example, as indicated in a table 216, in a case where the number of spins to be collectively inverted is N, the number of cycles is N at the time of adoption and at the time of non-adoption.

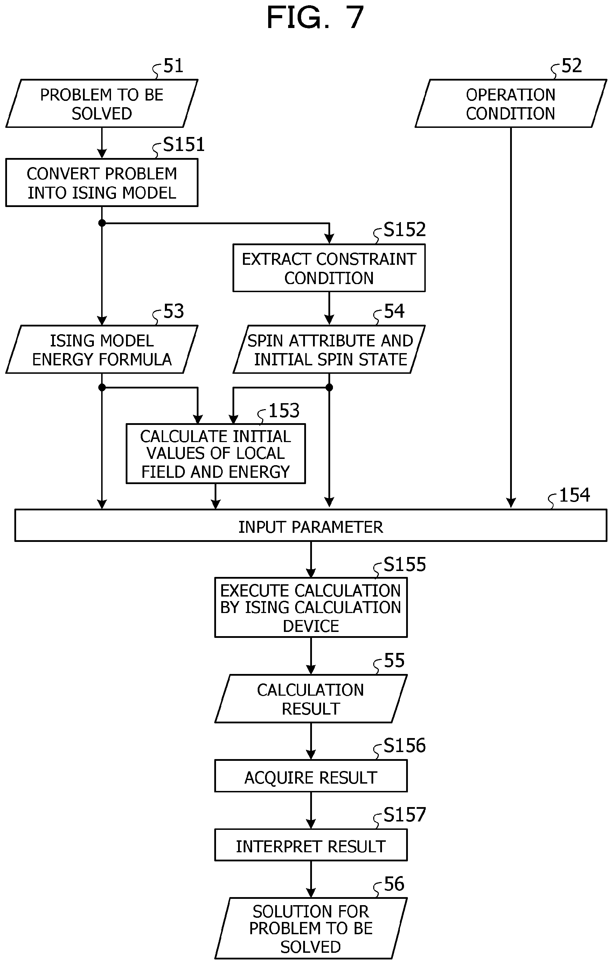

FIG. 7 is a flowchart of a process when the Ising calculation device is used. Here, a user who uses the Ising calculation device 1 is referred to as a user.

There is a problem to be solved 51 that the user desires to solve. The user converts the problem to be solved into the Ising model using a computer or the like (step S151). With this conversion, an Ising model energy formula 53 expressed by the formula (1) is acquired.

Furthermore, after converting the problem into the Ising model, the user extracts the constraint condition to solve the problem (step S152). As a result, a spin attribute and initial spin state 54 is acquired.

Next, a local field and an initial value of energy are calculated by a computer or the like using the Ising model energy formula 53 and the spin attribute and initial spin state 54 (step S153).

Moreover, the user determines an operation condition 52 such as the number of times of calculation when calculation is performed. Then, the Ising model energy formula 53, the spin attribute and initial spin state 54, the local field and the initial value of energy, and the operation condition 52 acquired above are input to the Ising calculation device 1 as parameters (step S154).

Thereafter, the Ising calculation device 1 executes calculation (step S155). This process is the optimum solution search process by the Ising calculation device 1 described above. As a result, a calculation result 55 is obtained.

The user acquires the calculation result 55 (step S156). Then, the user interprets the acquired calculation result 55 (step S157). With this interpretation, the user obtains a solution 56 for a problem to be solved with respect to the problem to be solved 51.

As described above, the Ising calculation device according to the present embodiment speculatively inverts the plurality of spins that satisfies conditions and collectively determines whether or not to adopt the series of spin inversions. Then, in a case where the inversion is not adopted, it is possible to return a value to an original value using information saved for restoration. As a result, it is possible to reach the minimum energy in a shorter time, and it is possible to improve a process performance for a combinatorial optimization problem of the Ising calculation device. Furthermore, in a case of the Ising calculation device according to the present embodiment, because a storage device that holds the spin state and the local field for restoration is disposed, a physical amount for the storage device increases. However, extra cycles for restoration are unnecessary, and it is possible to improve process efficiency.

[Second Embodiment]

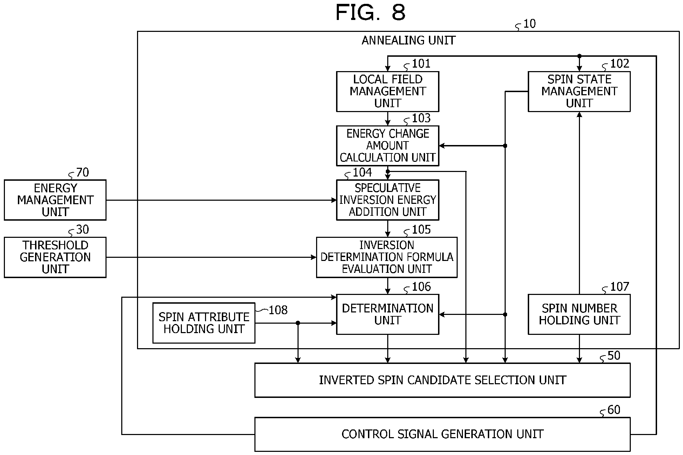

FIG. 8 is a block diagram illustrating details of an annealing unit according to a second embodiment. An Ising calculation device 1 according to the present embodiment is different from that in the first embodiment in that, in a case where collective inversion is not adopted, restoration is performed by reinverting a speculative inverted spin. In the following, a restoration process by the reinversion of the speculative inverted spin will be mainly described. In the following description, there is a case where descriptions of processes of respective units similar to those of the first embodiment are omitted.

Here, in a case where the collective inversion is performed, an inverted spin candidate selection unit 50 receives, from a determination unit 106, an input of information indicating whether or not a self-spin is a spin to be collectively inverted and information regarding collective inversion control indicating how many spins are collectively inverted. Then, the inverted spin candidate selection unit 50 proceeds a tournament to select an inverted spin candidate using the acquired information regarding the collective inversion control. Here, because the reading condition is set so as to select a specific spin and a spin not to be selected is set so as to not to be flagged before entering the inverted spin candidate selection unit 50, the inverted spin candidate selection unit 50 can preferentially select a spin to be collectively inverted.

When a spin number of the inversion candidate spin is input from the inverted spin candidate selection unit 50, a speculative inversion control unit 62 checks a holding restoration process flag and determines whether or not to execute the restoration process. In a case where the restoration process is executed, the speculative inversion control unit 62 instructs an inverted spin confirmation unit 61 to confirm an inverted spin in the restoration process.

On the other hand, in a case where the restoration process is not executed, the speculative inversion control unit 62 determines whether or not the inversion candidate spin is a spin to be collectively inverted from a spin attribute of the inversion candidate spin as in the first embodiment and executes a collective inversion process or a process for inverting a single spin according to the determination result.

Furthermore, in a case where the collective inversion is not adopted, the speculative inversion control unit 62 receives a notification indicating that the collective inversion is not adopted from the inverted spin confirmation unit 61. Then, the speculative inversion control unit 62 generates a restoration process flag representing that the restoration process is executed.

Furthermore, when the restoration of all the speculative inverted spins is completed, the speculative inversion control unit 62 receives an instruction to clear the restoration process flag from the inverted spin confirmation unit 61. Then, the speculative inversion control unit 62 clears the holding restoration process flag according to the instruction from the inverted spin confirmation unit 61.

In a case where the collective inversion is not adopted in the determination whether or not to adopt the collective inversion, the inverted spin confirmation unit 61 notifies a spin information holding unit 63, a reading condition generation unit 64, and an energy management unit 70 of that the collective inversion is not adopted. Furthermore, in the present embodiment, the spin information holding unit 63 generates a condition of a spin to be an inverted spin in the restoration from spin information held by the spin information holding unit 63. Then, the spin information holding unit 63 notifies the speculative inversion control unit 62 of that the collective inversion is not adopted and outputs the condition of the spin to be an inverted spin in the restoration to an annealing unit 10.

Furthermore, in a case where the restoration process is executed, the inverted spin confirmation unit 61 receives an instruction to confirm the inverted spin in the restoration process from the speculative inversion control unit 62. Then, the inverted spin confirmation unit 61 confirms the inversion candidate spin output from the inverted spin candidate selection unit 50 as an inverted spin. Thereafter, the inverted spin confirmation unit 61 notifies the energy management unit 70 of the confirmation of the inverted spin in the restoration process.

Next, the inverted spin confirmation unit 61 makes the spin information holding unit 63 delete spin information of the speculative inverted spin confirmed as an inverted spin. Then, the inverted spin confirmation unit 61 determines whether or not restoration of all restoration targets is completed according to whether or not the spin information held by the spin information holding unit 63 remains. In a case where the restoration of all the restoration targets is completed, the inverted spin confirmation unit 61 instructs the speculative inversion control unit 62 to clear the restoration process flag.

In a case where the energy management unit 70 receives the notification indicating the confirmation of the inverted spin in the restoration process, the energy calculation unit 72 maintains the holding information regarding the energy. In other cases, the energy management unit 70 operates as in the first embodiment.

In a case of the restoration process, the annealing unit 10 receives the notification indicating the confirmation of the inverted spin together with a spin number of the speculative inverted spin to be restored and updates the spin state and the local field as in a normal optimum solution search process. For example, the annealing unit 10 receives the input of the confirmation of the inverted spin from the inverted spin confirmation unit 109 together with the spin number of the inverted spin. Then, in a case where the self-spin is an inverted spin that is confirmed to be inverted, a spin state management unit 102 updates the spin state. Furthermore, a local field management unit 101 calculates a change amount of the local field by using the spin number of the inverted spin which is confirmed to be inverted in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field. With this update, a single spin of the speculative inverted spins is inverted and restored.

Moreover, the annealing unit 10 receives an input of a condition of the spin to be the inverted spin in the restoration from a control signal generation unit 60. Then, the determination unit 106 of the annealing unit 10 makes determination using the condition of the spin to be the inverted spin in the restoration as in a case of the collective inversion. Then, the determination unit 106 outputs information used for restoration control, such as information indicating that the self-spin is a spin to be restored, to the inverted spin candidate selection unit 50 together with the determination result.

The inverted spin candidate selection unit 50 makes the information used for restoration control participate in the tournament to select the inversion candidate spin and selects a spin. Here, because the reading condition is set so as to select a specific spin and a spin not to be selected is set so as to not to be flagged before entering the inverted spin candidate selection unit 50, the inverted spin candidate selection unit 50 can preferentially select a spin to be collectively inverted.

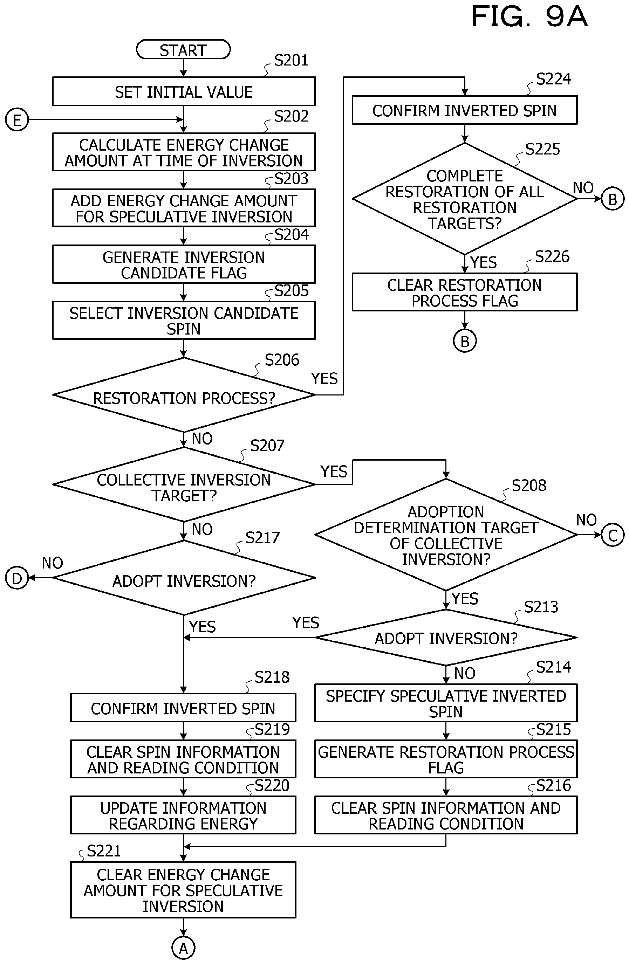

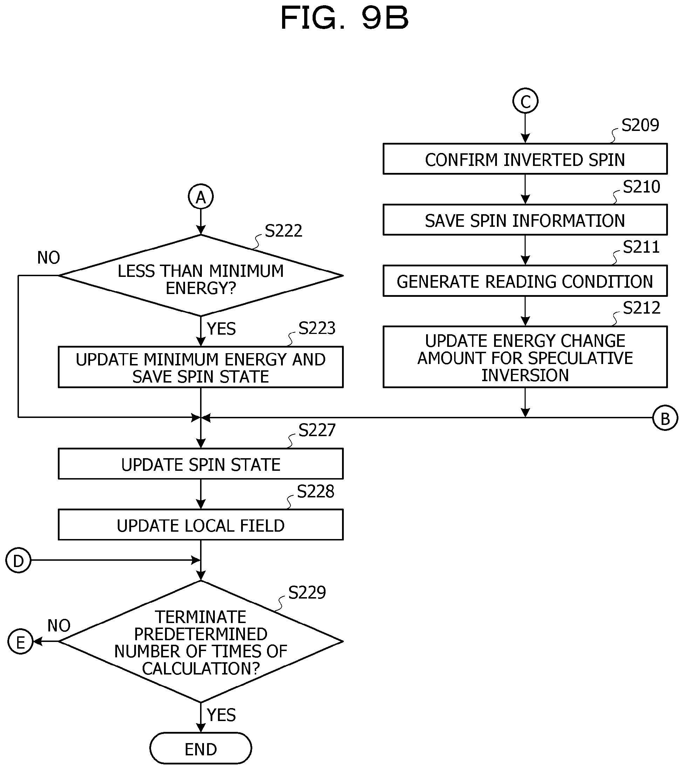

Next, a flow of an optimum solution search process by the Ising calculation device 1 according to the present embodiment will be described with reference to FIG. 9. FIG. 9 is a flowchart of an optimum solution search process by an Ising calculation device according to the second embodiment.

The Ising calculation device 1 sets an initial value in each unit on the basis of, for example, information input by an operator by using an external terminal (not illustrated) or the like (step S201).

Next, the energy change amount calculation unit 103 of the annealing unit 10 acquires the information regarding the local field held by the local field management unit 101. Furthermore, the energy change amount calculation unit 103 receives the input of the spin state of the inverted self-spin from the spin state management unit 102. Then, the energy change amount calculation unit 103 calculates the energy change amount at the time when the self-spin is inverted using the formula (2) (step S202). Thereafter, the energy change amount calculation unit 103 outputs the calculated energy change amount at the time when the self-spin is inverted to the speculative inversion energy addition unit 104.

The speculative inversion energy addition unit 104 receives the input of the energy change amount at the time when the self-spin is inverted from the energy change amount calculation unit 103. Next, in a case where the speculative inversion is performed, the speculative inversion energy addition unit 104 acquires the energy change amount for the speculative inversion caused by the speculative inversion that has been already performed from the energy calculation unit 72. In a case where the speculative inversion is not performed, the energy change amount for the speculative inversion acquired from the energy management unit 70 is zero. Then, the speculative inversion energy addition unit 104 adds the acquired energy change amount at the time when the self-spin is inverted to the energy change amount for the speculative inversion (step S203). Thereafter, the speculative inversion energy addition unit 104 outputs the energy change amount that is the addition result to the inversion determination formula evaluation unit 105.

The inversion determination formula evaluation unit 105 receives an input of the energy change amount from the speculative inversion energy addition unit 104. Furthermore, the inversion determination formula evaluation unit 105 receives the input of the value on the right side of the formula (6) to be a threshold from the threshold generation unit 30. Then, the inversion determination formula evaluation unit 105 determines whether or not the acquired energy change amount satisfies the inversion determination formula using the value acquired from the threshold generation unit 30 as the right side of the formula (6). Then, the inversion determination formula evaluation unit 105 outputs the determination result indicating whether or not the energy change amount satisfies the inversion determination formula to the determination unit 106. The determination unit 106 receives an input of the determination result indicating whether or not the energy change amount satisfies the inversion determination formula from the inversion determination formula evaluation unit 105. Moreover, the determination unit 106 receives an input of a reading condition from the control signal generation unit 60. Furthermore, the determination unit 106 acquires the information regarding the spin attribute of the self-spin from the spin attribute holding unit 108. Then, in a case where the self-spin satisfies the reading condition, the determination unit 106 generates an inversion candidate flag indicating that the self-spin is an inversion candidate. On the other hand, in a case where the self-spin does not satisfy the reading condition, the determination unit 106 generates an inversion candidate flag indicating that the self-spin is not an inversion candidate (step S204). Thereafter, the determination unit 106 outputs the generated inversion candidate flag to the inverted spin candidate selection unit 50.

The inverted spin candidate selection unit 50 receives inputs of the spin attribute, the spin state, the energy change amount, and the inversion candidate flag from the annealing unit 10 together with the spin number of the self-spin in each annealing unit 10. Then, the inverted spin candidate selection unit 50 selects the inversion candidate spin from among the spin numbers acquired from the respective annealing units 10 according to the random number value input from a random number generation unit 40 (step S205). Thereafter, the inverted spin candidate selection unit 50 outputs the spin attribute, the spin state, and the inversion candidate flag to the control signal generation unit 60 together with the spin number of the inversion candidate spin.

The control signal generation unit 60 receives inputs of the spin number, the spin attribute, the spin state, and the inversion candidate flag of the inversion candidate spin from the inverted spin candidate selection unit 50. Next, the speculative inversion control unit 62 checks the holding restoration process flag and determines whether or not the restoration process is executed (step S206). In a case where the restoration process is not executed (step S206: No), the speculative inversion control unit 62 determines whether or not the inversion candidate spin is a spin to be collectively inverted from the spin attribute of the inversion candidate spin (step S207).

In a case where the inversion candidate spin is a spin to be collectively inverted (step S207: Yes), the speculative inversion control unit 62 determines whether or not the inversion candidate spin is an adoption inversion target spin in the collective inversion (step S208).

In a case where the inversion candidate spin is not the adoption inversion target spin (step S208: No), the speculative inversion control unit 62 instructs the inverted spin confirmation unit 61 to confirm the inverted spin in the speculative inversion. Upon receiving the instruction to confirm the inverted spin in the speculative inversion, the inverted spin confirmation unit 61 confirms the inversion candidate spin as an inverted spin (step S209). Thereafter, the inverted spin confirmation unit 109 notifies the energy management unit 70 of the confirmation of the inverted spin. Furthermore, the inverted spin confirmation unit 61 notifies each annealing unit 10 of the confirmation of the inverted spin together with the spin number of the speculative inverted spin. Moreover, the inverted spin confirmation unit 61 outputs spin information including the spin number, the spin attribute, and the spin state of the speculative inverted spin to the spin information holding unit 63. Furthermore, the inverted spin confirmation unit 61 instructs the reading condition generation unit 64 to generate the reading condition.

The spin information holding unit 63 receives an input of the spin information of the speculative inverted spin from the inverted spin confirmation unit 61. Then, the spin information holding unit 63 saves the spin information of the speculative inverted spin (step S210).

Upon receiving the instruction to generate the reading condition, the reading condition generation unit 64 acquires the spin information of each spin on which the speculative inversion has been performed from the spin information holding unit 63. Then, the reading condition generation unit 64 generates the reading condition by using the acquired spin information (step S211) .

Upon receiving the notification indicating the confirmation of the inverted spin in the speculative inversion, the energy for speculative inversion calculation unit 71 of the energy management unit 70 acquires the energy change amount in a case where the spin state of the inverted spin is inverted from the inverted spin candidate selection unit 50. Then, the energy management unit 70 updates the holding energy change amount for the speculative inversion by setting an amount obtained by adding the energy change amount to the holding energy change amount for the speculative inversion as the energy change amount for the speculative inversion (step S212). Moreover, the energy for speculative inversion calculation unit 71 stores the spin state of each spin in a case where the spin state of the spin having the spin number notified from the inverted spin confirmation unit 61 is inverted, in the holding spin state of each spin. Thereafter, the optimum solution search process proceeds to step S221.

Whereas, in a case where the inversion candidate spin is the adoption inversion target spin (step S208: Yes), the speculative inversion control unit 62 outputs a request for inversion adoption determination of the collective inversion to the inverted spin confirmation unit 61. Upon receiving the request for inversion adoption determination of the collective inversion, the inverted spin confirmation unit 61 checks the inversion candidate flag of the inversion candidate spin and determines whether or not to adopt the collective inversion (step S213). In a case where the collective inversion is adopted (step S213: Yes), the optimum solution search process proceeds to step S218.

On the other hand, in a case where the collective inversion is not adopted (step S213: No), the inverted spin confirmation unit 61 checks the spin information held by the spin information holding unit 63 and specifies the speculative inverted spin (step S214).

Next, the inverted spin confirmation unit 61 notifies the spin information holding unit 63, the reading condition generation unit 64, and the energy calculation unit 72 of that the collective inversion is not adopted. Furthermore, the spin information holding unit 63 notifies the speculative inversion control unit 62 of a condition to select the specified speculative inverted spin together with the notification indicating that the collective inversion is not adopted. Upon receiving the notification indicating that the collective inversion is not adopted, the speculative inversion control unit 62 generates a restoration process flag representing that the restoration process is executed (step S215).

When receiving the notification indicating that the collective inversion is not adopted, the spin information holding unit 63 clears the holding spin information. Furthermore, the reading condition generation unit 64 clears the holding reading condition when receiving the notification indicating that the collective inversion is not adopted (step S216). Thereafter, the optimum solution search process proceeds to step S221.

On the other hand, in a case where the inversion candidate spin is a spin that is not to be collectively inverted (step S207: No), the speculative inversion control unit 62 outputs the request for inversion adoption determination to the inverted spin confirmation unit 61. When receiving the request for inversion adoption determination from the speculative inversion control unit 62, the inverted spin confirmation unit 61 checks the inversion candidate flag of the inversion candidate spin and determines whether or not to adopt the inversion of the inversion candidate spin (step S217). In a case where the inversion of the inversion candidate spin is not adopted (step S217: No), the optimum solution search process proceeds to step S229.

In a case where the collective inversion is adopted (step S213: Yes) and in a case where the inversion of the inversion candidate spin is adopted (step S217: Yes), the inverted spin confirmation unit 61 confirms the inversion candidate spin as an inverted spin (step S218). Then, the inverted spin confirmation unit 61 notifies the energy management unit 70 of the confirmation of the inverted spin. Furthermore, the inverted spin confirmation unit 61 notifies each annealing unit 10 of the confirmation of the inverted spin together with the spin number of the inverted spin. Moreover, the inverted spin confirmation unit 61 notifies the spin information holding unit 63 and the reading condition generation unit 64 of the adoption of the inversion.

When receiving the notification indicating that the collective inversion is adopted, the spin information holding unit 63 clears the holding spin information. Furthermore, the reading condition generation unit 64 clears the holding reading condition when receiving the notification indicating that the collective inversion is adopted (step S219).

Upon receiving the notification indicating the confirmation of the inverted spin, the energy calculation unit 72 of the energy management unit 70 acquires the spin state of each spin to which the speculative inversion up to this point is added from the energy for speculative inversion calculation unit 71. Then, the energy calculation unit 72 inverts the spin state of the spin having the spin number acquired from the inverted spin candidate selection unit 50 in the spin state of each spin to which the speculative inversion up to this point is added. Furthermore, the energy calculation unit 72 adds the energy change amount input from the inverted spin candidate selection unit 50 to the current energy held by the energy calculation unit 72 and calculates energy in a case where the spin state of the inverted spin is inverted. Here, because the spin information is not received from the energy for speculative inversion calculation unit 71 in a case where the speculative inversion is not performed, the energy calculation unit 72 inverts the spin state of the spin having the spin number acquired from the inverted spin candidate selection unit 50 in the spin state of each spin of the energy calculation unit 72. Furthermore, the energy calculation unit 72 adds the energy change amount input from the inverted spin candidate selection unit 50 to the current energy held by the energy calculation unit 72 and calculates energy in a case where the spin state of the inverted spin is inverted. Thereafter, the energy calculation unit 72 updates the spin state of each spin and the holding information regarding the energy (step S220). The energy calculation unit 72 outputs the information regarding the calculated energy and the spin state of each spin to the search result holding unit 80.

Furthermore, the energy calculation unit 72 instructs the energy for speculative inversion calculation unit 71 to clear the energy change amount for the speculative inversion. Upon receiving the instruction from the energy calculation unit 72, the energy for speculative inversion calculation unit 71 clears the holding energy change amount for the speculative inversion (step S221).

The search result holding unit 80 determines whether or not the energy acquired from the energy calculation unit 72 is less than the holding minimum energy (step S222). In a case where the energy acquired from the energy calculation unit 72 is equal to or more than the holding minimum energy (step S222: No), the optimum solution search process proceeds to step S227.

On the other hand, in a case where the energy acquired from the energy calculation unit 72 is less than the holding minimum energy (step S222: Yes), the search result holding unit 80 updates the holding minimum energy by setting the energy acquired from the energy calculation unit 72 as the minimum energy. Moreover, the search result holding unit 80 saves the spin state of each spin acquired from the energy calculation unit 72 as the spin state in a case of the minimum energy (step S223).

On the other hand, in a case where the restoration process is executed (step S206: Yes), the speculative inversion control unit 62 instructs the inverted spin confirmation unit 61 to confirm an inverted spin in the restoration process. Upon receiving the instruction to confirm the inverted spin in the restoration process, the inverted spin confirmation unit 61 selects the spin to be an inverted spin from the spin information held by the spin information holding unit 63 and confirms the inverted spin (step S224). Then, the inverted spin confirmation unit 61 notifies the energy management unit 70 of the confirmation of the inverted spin in the restoration process. In a case of receiving the notification indicating the confirmation of the inverted spin in the restoration process, the energy calculation unit 72 of the energy management unit 70 maintains the holding information regarding the energy.

Next, the inverted spin confirmation unit 61 makes the spin information holding unit 63 delete spin information of the speculative inverted spin confirmed as an inverted spin. Then, the inverted spin confirmation unit 61 determines whether or not restoration of all restoration targets is completed according to whether or not the spin information held by the spin information holding unit 63 remains (step S225). In a case where the restoration target still remains (step S225: No), the optimum solution search process proceeds to step S227.

On the other hand, in a case where the restoration of all the restoration targets is completed (step S225: Yes), the inverted spin confirmation unit 61 instructs the speculative inversion control unit 62 to clear the restoration process flag. Upon receiving the instruction from the inverted spin confirmation unit 61, the speculative inversion control unit 62 clears the holding restoration process flag (step S226). Thereafter, the optimum solution search process proceeds to step S227.

The annealing unit 10 receives the input of the confirmation of the inverted spin from the inverted spin confirmation unit 109 together with the spin number of the inverted spin. In a case where the self-spin is the inverted spin confirmed to be inverted, the spin state management unit 102 updates the spin state (step S227).

The local field management unit 101 calculates a change amount of the local field by using the spin number of the inverted spin confirmed to be inverted in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field (step S228).

Thereafter, the search result holding unit 80 determines whether or not the predetermined number of times of calculation is terminated (step S229). In a case where the predetermined number of times of calculation is not terminated (step S229: No), the optimum solution search process returns to step S202. On the other hand, in a case where the predetermined number of times of calculation is terminated (step S229: Yes), the search result holding unit 80 determines a spin state with the minimum energy at that time as an optimum solution and terminates the optimum solution search process.

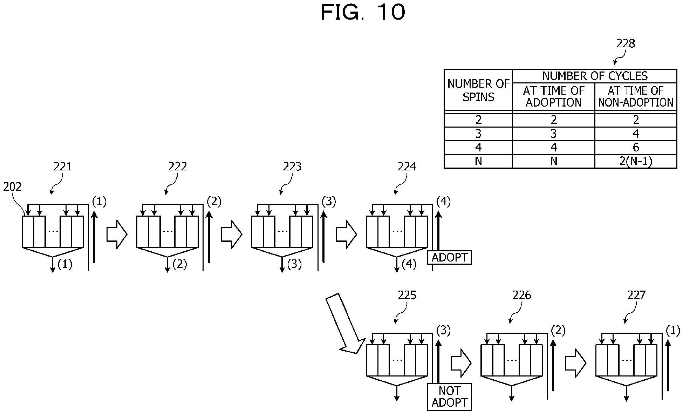

Moreover, an operation of the Ising calculation device 1 according to the present embodiment at the time when the optimum solution search process is executed will be described with reference to FIG. 10. FIG. 10 is a diagram of an operation image at the time when the Ising calculation device according to the second embodiment executes the optimum solution search process. Here, a case where four spins are collectively inverted will be described. (1) to (4) in FIG. 10 represent spin numbers of speculative inverted spins that are read in the N (N = 1, 2, 3, 4)-th order.

In a case where the collective inversion is performed, as indicated in a state 221, the first spin in the collective inversion is selected, and the control circuit 203 sends confirmation of the inverted spin with respect to the first spin to the unit circuit 202. Next, as indicated in a state 222, the second spin is selected, and the control circuit 203 sends confirmation of the inverted spin with respect to the second spin to the unit circuit 202. Next, as indicated in a state 223, the third spin is selected, and the control circuit 203 sends confirmation of the inverted spin with respect to the third spin to the unit circuit 202. Thereafter, the control circuit 203 adopts the collective inversion at the time when the fourth spin is selected. In a case where the collective inversion is adopted, as indicated in a state 224, the control circuit 203 sends confirmation of the inverted spin with respect to the fourth spin to the unit circuit 202, and the spin state and the local field are updated.

On the other hand, in a case where the collective inversion is not adopted, as indicated in a state 225, the control circuit 203 sends the confirmation of the third spin as an inverted spin to the unit circuit 202, and the third spin is inverted and restored. Next, as indicated in a state 226, the control circuit 203 sends the confirmation of the second spin as an inverted spin to the unit circuit 202, and the second spin is inverted and restored. Next, as indicated in a state 227, the control circuit 203 sends the confirmation of the first spin as an inverted spin to the unit circuit 202, and the first spin is inverted and restored. With this operation, each unit circuit 202 restores the spin state and the local field to the state before the speculative inversion is performed.

In this case, two more cycles are performed in a case where the collective inversion is not adopted that that in a case of the adoption. For example, as indicated in a table 228, in a case where the number of spins to be collectively inverted is N, the number of cycles is N at the time of adoption, whereas the number of cycles is 2 (N - 1) at the time of non-adoption.

As described above, the Ising calculation device according to the present embodiment speculatively inverts the plurality of spins that satisfies conditions and collectively determines whether or not to adopt the series of spin inversions. Then, in a case where the inversion is not adopted, the value can be returned to the original value by sequentially inverting the speculative inverted spins again. As a result, it is possible to improve a process performance for a combinatorial optimization problem of the Ising calculation device. Furthermore, in a case of the Ising calculation device according to the present embodiment, the number of cycles for restoration increases. However, it is not needed to newly provide a storage device that stores information for restoration, and it is possible to reduce a physical amount.

[Third Embodiment]

Next, a third embodiment will be described. In a case where a bit representing each spin is allocated to each spin, an Ising calculation device 1 according to the present embodiment solves a problem having a constraint condition that each of n bits is one in spins of a predetermined number of bits. Hereinafter, this constraint condition is referred to as "n-hot constraint". The problem having the n-hot constraint includes the four color theorem or the like. In the following, there is a case where the spin is referred to as a "bit" indicating the bit allocated to the spin.

Here, in a case where an optimum solution for the problem having the n-hot constraint is searched, it is possible to conform to the n-hot constraint by satisfying the following conditions. The first condition is a condition that, in a case where a spin having a spin state of one according to the n-hot constraint is inverted, spins having a spin state of zero among a set of the spins that comply with the n-hot constraint are collectively inverted. Furthermore, the second condition is a condition that, in a case where a spin having a spin state of zero according to the n-hot constraint is inverted, spins having a spin state of one among a set of the spins that comply with the n-hot constraint are collectively inverted. Therefore, in a case of the problem having the n-hot constraint, it is considered that search that collectively inverts two spins is effective. Therefore, a case where two spins are collectively inverted will be described below. In the following, a set of spins that comply with the same n-hot constraint is referred to as an n-hot constraint group.

Furthermore, in the present embodiment, as a restoration method, a method is adopted that sequentially restores speculative inverted spins described in the second embodiment. However, because two spins are collectively inverted, when the collective inversion is not adopted, the restoration is completed by returning one speculative inverted spin. Therefore, a restoration process does not occur.

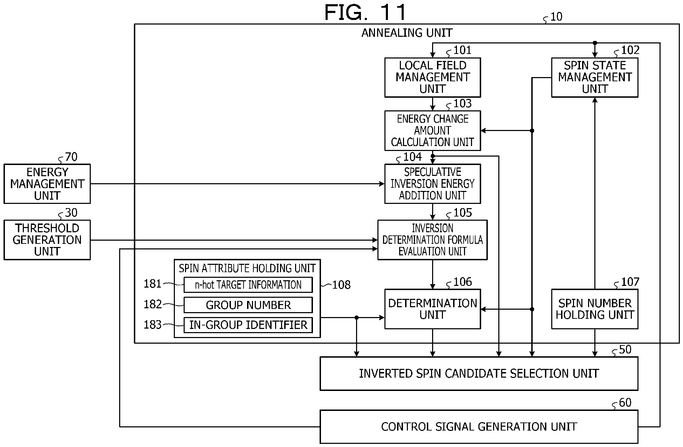

FIG. 11 is a block diagram illustrating details of an annealing unit according to the third embodiment. A spin attribute holding unit 108 according to the present embodiment includes n-hot target information 181, a group number 182, an in-group identifier 183 as spin attributes.

The n-hot target information 181 is a flag for determining whether or not a bit is a bit that complies with the n-hot constraint. For example, the n-hot target information 181 is represented as $T_i$, a case of $T_i = 1$ represents that the bit complies with the n-hot constraint, and a case of $T_i = 0$ represents that the bit does not comply with the n-hot constraint. Furthermore, the group number 182 represents a group number of an n-hot constraint group to which a bit belongs in a case where the bit complies with the n-hot constraint. In the following, there is a case where the group number is represented as $G_i$. Furthermore, the in-group identifier 183 is an identifier to distinguish the spins in the n-hot constraint group. In the following, there is a case where the in-group identifier 183 is represented as $N_i$.

In a case where an inversion candidate spin input from an inverted spin candidate selection unit 50 satisfies $T_i = 1$, a speculative inversion control unit 62 determines that the inversion candidate spin is a collective inversion target that complies with the n-hot constraint. Then, the speculative inversion control unit 62 instructs an inverted spin confirmation unit 61 to confirm an inverted spin in speculative inversion.

Upon receiving the instruction to confirm the inverted spin in the speculative inversion from the speculative inversion control unit 62, the inverted spin confirmation unit 61 confirms the inversion of the inversion candidate spin regardless of a value of an inversion candidate flag and performs the speculative inversion.

Furthermore, in a case where a selection candidate spin is an adoption determination target, the inverted spin confirmation unit 61 receives an instruction to determine whether or not to adopt the collective inversion from the speculative inversion control unit 62. Then, the inverted spin confirmation unit 61 checks the inversion candidate flag and determines whether or not to adopt the collective inversion. In a case where the collective inversion is adopted, the inverted spin confirmation unit 61 confirms the selection candidate spin as an inverted spin. Then, the inverted spin confirmation unit 61 outputs the confirmation of the inverted spin to an energy management unit 70 and each annealing unit 10.

On the other hand, in a case where the collective inversion is not adopted, the inverted spin confirmation unit 61 specifies a speculative inverted spin from spin information held by a spin information holding unit 63, generates a condition to select the speculative inverted spin, and outputs the generated condition to the annealing unit 10. Moreover, the inverted spin confirmation unit 61 outputs clearing of the spin information and a reading condition to the spin information holding unit 63 and a reading condition generation unit 64. Thereafter, upon receiving an instruction to confirm the inverted spin in restoration from the speculative inversion control unit 62, the inverted spin confirmation unit 61 outputs the confirmation of the inverted spin to the energy management unit 70 and the annealing unit 10. According to the above-described process when the inverted spin confirmation unit 61 does not adopt the collective inversion, the restoration is completed.

The reading condition generation unit 64 generates a reading condition that satisfies $T_j = 1$, $G_j = G_i$, $N_j \neq N_i$,

and $x_j \neq x_i$ and a determination formula as a subsequent bits reading condition. Here, Gi, Ni, and $x_i$ respectively indicate the group number 182, the in-group identifier 183, and the spin state of the spin selected in the first bit. Furthermore, Tj, Gj, Nj, and $x_j$ indicate values of the spin attributes of the spin selected in the second bit.

According to Tj = 1, a bit complying with the n-hot constraint is selected as the second bit. Furthermore, according to Gj = Gi and $x_j \neq x_i$, a bit having the same n-hot constraint group as the first bit and a different spin state from the first bit is selected as a second bit. Moreover, according to Nj ≠ Ni, reselection of a bit same as the first bit that has been speculatively inverted as a second bit is excluded.

Then, the reading condition generation unit 64 outputs, to the annealing unit 10, a reading condition that satisfies Tj = 1, Gj = Gi, Nj ≠ Ni, and $x_j \neq x_i$ and the determination formula.

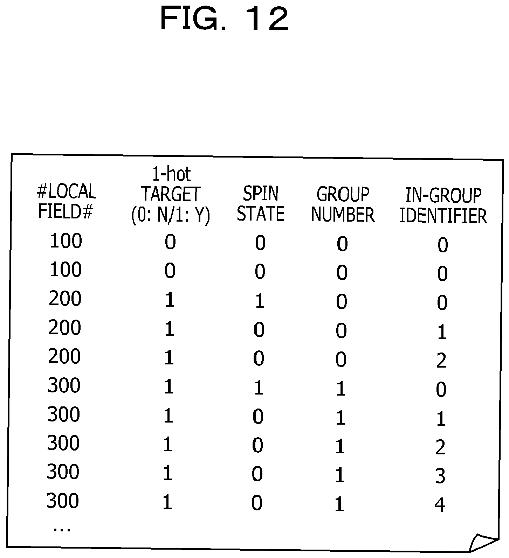

A state satisfying the n-hot constraint is input to the annealing unit 10 as initial setting. FIG. 12 is a diagram illustrating an example of an initial value setting instruction by an Ising calculation device according to the third embodiment. As illustrated in FIG. 12, the Ising calculation device 1 according to the present embodiment sets a spin attribute that satisfies the 1-hot constraint and initial values of the local field and the spin state.

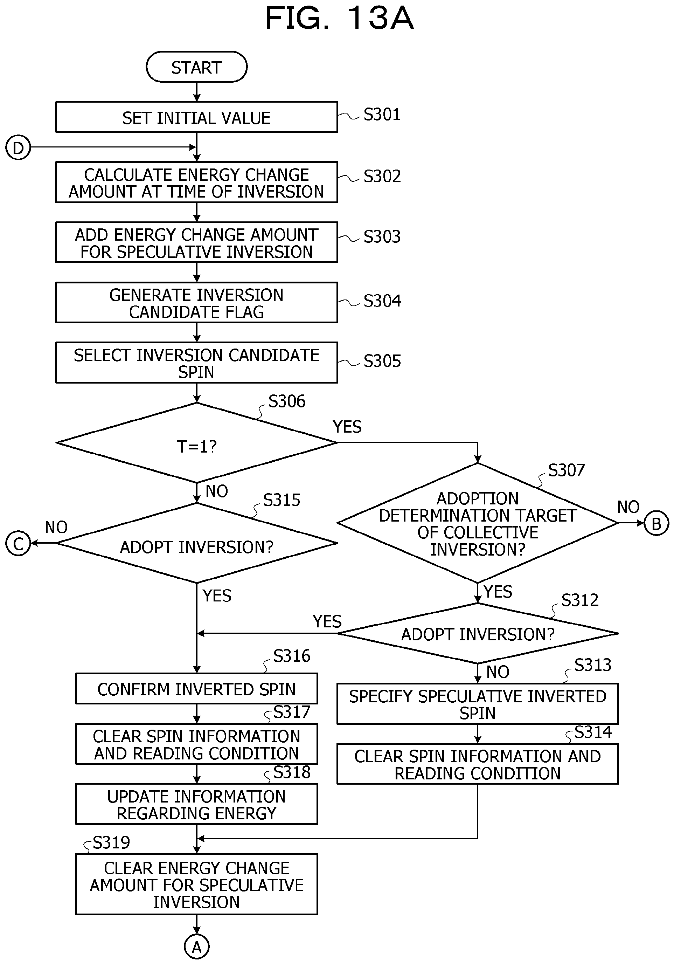

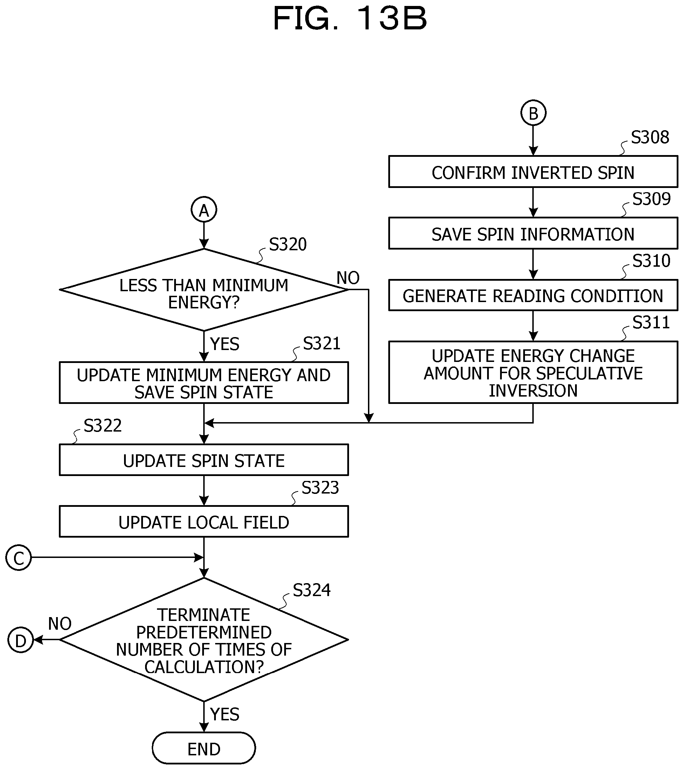

Next, a flow of an optimum solution search process by the Ising calculation device 1 according to the present embodiment will be described with reference to FIG. 13A and 13B. FIG. 13A and 13B are a flowchart of an optimum solution search process of a problem having an n-hot constraint by the Ising calculation device according to the third embodiment.

The Ising calculation device 1 sets an initial value in each unit on the basis of, for example, information input by an operator by using an external terminal (not illustrated) or the like (step S301).

Next, the energy change amount calculation unit 103 of the annealing unit 10 acquires the information regarding the local field held by the local field management unit 101. Furthermore, the energy change amount calculation unit 103 receives the input of the spin state of the inverted self-spin from the spin state management unit 102. Then, the energy change amount calculation unit 103 calculates the energy change amount, at the time when the self-spin is inverted, using the formula (2) (step S302). Thereafter, the energy change amount calculation unit 103 outputs the calculated energy change amount at the time when the self-spin is inverted to the speculative inversion energy addition unit 104.

The speculative inversion energy addition unit 104 receives the input of the energy change amount at the time when the self-spin is inverted from the energy change amount calculation unit 103. Next, in a case where the speculative inversion is performed, the speculative inversion energy addition unit 104 acquires the energy change amount for the speculative inversion caused by the speculative inversion that has been already performed from the energy calculation unit 72. In a case where the speculative inversion is not performed, the energy change amount for the speculative inversion acquired from the energy management unit 70 is zero. Then, the speculative inversion energy addition unit 104 adds the acquired energy change amount at the time when the self-spin is inverted to the energy change amount for the speculative inversion (step S303). Thereafter, the speculative inversion energy addition unit 104 outputs the energy change amount that is the addition result to the inversion determination formula evaluation unit 105.

The inversion determination formula evaluation unit 105 receives an input of the energy change amount from the speculative inversion energy addition unit 104. Furthermore, the inversion determination formula evaluation unit 105 receives the input of the value on the right side of the formula (6) to be a threshold from the threshold generation unit 30. Then, the inversion determination formula evaluation unit 105 determines whether or not the acquired energy change amount satisfies the inversion determination formula using the value acquired from the threshold generation unit 30 as the right side of the formula (6). Thereafter, the inversion determination formula evaluation unit 105 outputs the determination result indicating whether or not the energy change amount satisfies the inversion determination formula to the determination unit 106. The determination unit 106 receives an input of the determination result indicating whether or not the energy change amount satisfies the inversion determination formula from the inversion determination formula evaluation unit 105. Moreover, the determination unit 106 receives an input of a reading condition from the control signal generation unit 60. Furthermore, the determination unit 106 acquires the information regarding the spin attribute of the self-spin from the spin attribute holding unit 108. Then, in a case where the self-spin satisfies the reading condition, the determination unit 106 generates an inversion candidate flag indicating that the self-spin is an inversion candidate. On the other hand, in a case where the self-spin does not satisfy the reading condition, the determination unit 106 generates an inversion candidate flag indicating that the self-spin is not an inversion candidate (step S304). Thereafter, the determination unit 106 outputs the generated inversion candidate flag to the inverted spin candidate selection unit 50.

The inverted spin candidate selection unit 50 receives inputs of the spin attribute, the spin state, the energy change amount, and the inversion candidate flag from the annealing unit 10 together with the spin number of the self-spin in each annealing unit 10. Then, the inverted spin candidate selection unit 50 selects the inversion candidate spin from among the spin numbers acquired from the respective annealing units 10 according to the random number value input from the random number generation unit 40 (step S305). Thereafter, the inverted spin candidate selection unit 50 outputs the spin attribute, the spin state, and the inversion candidate flag to the control signal generation unit 60 together with the spin number of the inversion candidate spin.

The control signal generation unit 60 receives inputs of the spin number, the spin attribute, the spin state, and the inversion candidate flag of the inversion candidate spin from the inverted spin candidate selection unit 50. Next, the speculative inversion control unit 62 checks the n-hot target information 181 included in the spin attribute of the inversion candidate spin and determines whether or not T = 1 is satisfied (step S306).

In a case of T = 1 is satisfied (step S306: Yes), because the inversion candidate spin is a spin to be collectively inverted, the speculative inversion control unit 62 determines whether or not the inversion candidate spin is an adoption inversion target spin in the collective inversion (step S307).

In a case where the inversion candidate spin is not the adoption inversion target spin (step S307: No), the speculative inversion control unit 62 instructs the inverted spin confirmation unit 61 to confirm the inverted spin in the speculative inversion. Upon receiving the instruction to confirm the inverted spin in the speculative inversion, the inverted spin confirmation unit 61 confirms the inversion candidate spin as an inverted spin (step S308). Thereafter, the inverted spin confirmation unit 109 notifies the energy management unit 70 of the confirmation of the inverted spin. Furthermore, the inverted spin confirmation unit 61 notifies each annealing unit 10 of the confirmation of the inverted spin together with the spin number of the speculative inverted spin. Moreover, the inverted spin confirmation unit 61 outputs spin information including the spin number, the spin attribute, and the spin state of the speculative inverted spin to the spin information holding unit 63. Furthermore, the inverted spin confirmation unit 61 instructs the reading condition generation unit 64 to generate the reading condition.

The spin information holding unit 63 receives an input of the spin information of the speculative inverted spin from the inverted spin confirmation unit 61. Then, the spin information holding unit 63 saves the spin information of the speculative inverted spin (step S309).

Upon receiving the instruction to generate the reading condition, the reading condition generation unit 64 acquires the spin information of each spin on which the speculative inversion has been performed from the spin information holding unit 63. Then, the reading condition generation unit 64 generates the reading condition by using the acquired spin information (step S310).

Upon receiving the notification indicating the confirmation of the inverted spin in the speculative inversion, the energy for speculative inversion calculation unit 71 of the energy management unit 70 acquires the energy change amount in a case where the spin state of the inverted spin is inverted from the inverted spin candidate selection unit 50. Then, the energy management unit 70 updates the holding energy change amount for the speculative inversion by setting an amount obtained by adding the energy change amount to the holding energy change amount for the speculative inversion as the energy change amount for the speculative inversion (step S311). Moreover, the energy for speculative inversion calculation unit 71 stores the spin state of each spin in a case where the spin state of the spin having the spin number notified from the inverted spin confirmation unit 61 is inverted, in the holding spin state of each spin. Thereafter, the optimum solution search process proceeds to step S322.

Whereas, in a case where the inversion candidate spin is the adoption inversion target spin (step S307: Yes), the speculative inversion control unit 62 outputs a request for inversion adoption determination of the collective inversion to the inverted spin confirmation unit 61. Upon receiving the request for inversion adoption determination of the collective inversion, the inverted spin confirmation unit 61 checks the inversion candidate flag of the inversion candidate spin and determines whether or not to adopt the collective inversion (step S312). In a case where the collective inversion is adopted (step S312: Yes), the optimum solution search process proceeds to step S316.

On the other hand, in a case where the collective inversion is not adopted (step S312: No), the inverted spin confirmation unit 61 checks the spin information held by the spin information holding unit 63 and specifies the speculative inverted spin (step S313). Next, the inverted spin confirmation unit 61 notifies the spin information holding unit 63, the reading condition generation unit 64, and the energy calculation unit 72 of that the collective inversion is not adopted. Furthermore, the spin information holding unit 63 notifies the speculative inversion control unit 62 of a condition to select the specified speculative inverted spin together with the notification indicating that the collective inversion is not adopted.

When receiving the notification indicating that the collective inversion is not adopted, the spin information holding unit 63 clears the holding spin information. Furthermore, the reading condition generation unit 64 clears the holding read condition when receiving the notification indicating that the collective inversion is not adopted (step S314). Thereafter, the optimum solution search process proceeds to step S320.

On the other hand, in a case where the inversion candidate spin is a spin that is not to be collectively inverted (step S306: No), the speculative inversion control unit 62 outputs the request for inversion adoption determination to the inverted spin confirmation unit 61. When receiving the request for inversion adoption determination from the speculative inversion control unit 62, the inverted spin confirmation unit 61 checks the inversion candidate flag of the inversion candidate spin and determines whether or not to adopt the inversion of the inversion candidate spin (step S315). In a case where the inversion of the inversion candidate spin is not adopted (step S315: No), the optimum solution search process proceeds to step S324.

In a case where the collective inversion is adopted (step S315: Yes) and in a case where the inversion of the inversion candidate spin is adopted (step S312: Yes), the inverted spin confirmation unit 61 confirms the inversion candidate spin as an inverted spin (step S316). Then, the inverted spin confirmation unit 61 notifies the energy management unit 70 of the confirmation of the inverted spin. Furthermore, the inverted spin confirmation unit 61 notifies each annealing unit 10 of the confirmation of the inverted spin together with the spin number of the inverted spin. Moreover, the inverted spin confirmation unit 61 notifies the spin information holding unit 63 and the reading condition generation unit 64 of the adoption of the inversion.

When receiving the notification indicating that the collective inversion is adopted, the spin information holding unit 63 clears the holding spin information. Furthermore, the reading condition generation unit 64 clears the holding reading condition when receiving the notification indicating that the collective inversion is adopted (step S317).

Upon receiving the notification indicating the confirmation of the inverted spin, the energy calculation unit 72 of the energy management unit 70 acquires the spin state of each spin to which the speculative inversion up to this point is added from the energy for speculative inversion calculation unit 71. Then, the energy calculation unit 72 inverts the spin state of the spin having the spin number acquired from the inverted spin candidate selection unit 50 in the spin state of each spin to which the speculative inversion up to this point is added. Furthermore, the energy calculation unit 72 adds the energy change amount input from the inverted spin candidate selection unit 50 to the current energy held by the energy calculation unit 72 and calculates energy in a case where the spin state of the inverted spin is inverted. Here, in a case where the speculative inversion is not performed, the energy calculation unit 72 does not receive the spin information from the energy for speculative inversion calculation unit 71. In that case, the energy calculation unit 72 inverts the spin state of the spin having the spin number acquired from the inverted spin candidate selection unit 50, in the spin state of each spin of the energy calculation unit 72. Furthermore, the energy calculation unit 72 adds the energy change amount input from the inverted spin candidate selection unit 50 to the current energy held by the energy calculation unit 72 and calculates energy in a case where the spin state of the inverted spin is inverted. Thereafter, the energy calculation unit 72 updates the spin state of each spin and the holding information regarding the energy (step S318). The energy calculation unit 72 outputs the information regarding the calculated energy and the spin state of each spin to the search result holding unit 80.

Furthermore, the energy calculation unit 72 instructs the energy for speculative inversion calculation unit 71 to clear the energy change amount for the speculative inversion. Upon receiving the instruction from the energy calculation unit 72, the energy for speculative inversion calculation unit 71 clears the holding energy change amount for the speculative inversion (step S319).

The search result holding unit 80 determines whether or not the energy acquired from the energy calculation unit 72 is less than the holding minimum energy (step S320). In a case where the energy acquired from the energy calculation unit 72 is equal to or more than the holding minimum energy (step S320: No), the optimum solution search process proceeds to step S322.

On the other hand, in a case where the energy acquired from the energy calculation unit 72 is less than the holding minimum energy (step S320: Yes), the search result holding unit 80 updates the holding minimum energy by setting the energy acquired from the energy calculation unit 72 as the minimum energy. Moreover, the search result holding unit 80 saves the spin state of each spin acquired from the energy calculation unit 72 as the spin state in a case of the minimum energy (step S321).

The annealing unit 10 receives the input of the confirmation of the inverted spin from the inverted spin confirmation unit 109 together with the spin number of the inverted spin. In a case where the self-spin is the inverted spin confirmed to be inverted, the spin state management unit 102 updates the spin state (step S322).

The local field management unit 101 calculates a change amount of the local field by using the spin number of the inverted spin confirmed to be inverted in the formula (4). Then, the local field management unit 101 calculates the local field with respect to the self-spin by using the calculated change amount of the local field for the holding information regarding the local field. Thereafter, the local field management unit 101 updates the holding information regarding the local field as using the information regarding the calculated local field as information regarding the current local field (step S323).

Thereafter, the search result holding unit 80 determines whether or not the predetermined number of times of calculation is terminated (step S324). In a case where the predetermined number of times of calculation is not terminated (step S324: No), the optimum solution search process returns to step S302. On the other hand, in a case where the predetermined number of times of calculation is terminated (step S324: Yes), the search result holding unit 80 determines a spin state with the minimum energy at that time as an optimum solution and terminates the optimum solution search process.

As described above, the Ising calculation device according to the present embodiment can solve the problem having the n-hot constraint in a short time. In this way, it is possible to improve a process performance for a combinatorial optimization problem of the Ising calculation device.

[Fourth Embodiment]

Next, a fourth embodiment will be described. An Ising calculation device 1 according to the present embodiment solves a problem having constraint conditions that each spin belongs to two groups and the number of spins having a spin state of one among the spins belonging to each group is one. Hereinafter, this constraint condition is referred to as "2way-1hot constraint". Problems having the 2way-1hot constraint include the Traveling Salesman Problem (TSP), the Quadratic Assignment Problem (QAP), or the like. Here, a state where a bit is allocated to each spin is assumed and described.

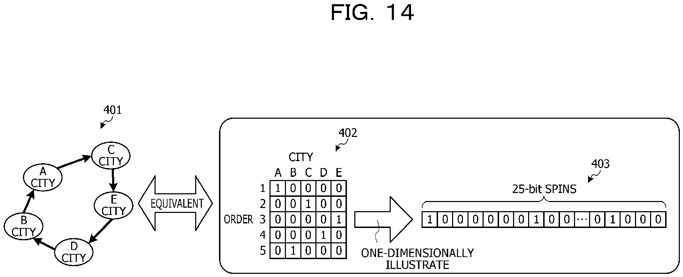

FIG. 14 is a diagram illustrating a modification of the Traveling Salesman Problem to the spins. FIG. 14 is an example in which a Traveling Salesman Problem of five cities illustrated in Graph 401 in which a traveling order and city names are illustrated by 25-bit spins as illustrated in Graph 402. Each spin belongs to two groups including an "order group" indicating an order and a "city name group" indicating a city name. Then, a value of one specific bit of all the order groups and all the city groups is one. In a case of viewing a $5 \times 5$ matrix illustrated in Graph 402, it is requested to satisfy the constraint that only one spin has the spin state of one in all the vertical columns and horizontal rows, and it can be said that the Traveling Salesman Problem has the 2way-1hot constraint. The Ising calculation device 1 according to the present embodiment obtains a spin state of each spin with a minimum energy illustrated in Graph 403 in which the bits in Graph 402 are aligned in line and one-dimensionally illustrated.

The Ising calculation device 1 starts calculation after setting the state where the 2way-1hot constraint is satisfied as an initial state. In a case of four bits of which two bits each are arranged vertically and horizontally, in order to satisfy the 2way-1hot constraint, it is requested that the number of spins, of which the spin state is one, is one both in the horizontal direction and the vertical direction. Therefore, in a case where the spin that complies with the 2way-1hot constraint is inverted, if the Ising calculation device 1 collectively inverts four bits of which each two bits are vertically and horizontally arranged, it is possible to proceed minimum energy search calculation while the inverted result satisfies the 2way-1hot constraint.

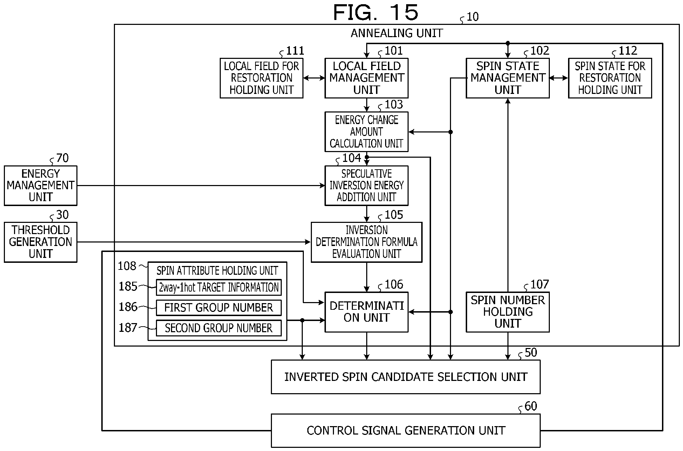

FIG. 15 is a block diagram illustrating details of an annealing unit according to a fourth embodiment. A spin attribute holding unit 108 according to the present embodiment includes 2way-1hot target information 185, a first group number 186, and a second group number 187 as spin attributes.

The 2way-1hot target information 185 is a flag to determine whether or not a bit complies with the n-hot constraint. For example, the 2way-1hot target information 185 is represented as Ti, a case of Ti = 2t represents that the bit complies with the 2way-1hot constraint, and a case where Ti is any other value represents that the bit does not comply with the 2way-1hot constraint. Furthermore, the first group number 186 is a group number of a first group that is one of two 2way-1hot constraint groups to which the bit belongs in a case where the bit complies with the 2way-1hot constraint. Furthermore, the second group number 187 is a group number of a second group that is another one of two 2way-1hot constraint groups to which the bit belongs in a case where the bit complies with the 2way-1hot constraint. In the following, the first group number 186 is represented as Xi, and the second group number 187 is represented as Yi.

In a case where an inversion candidate spin input from an inverted spin candidate selection unit 50 satisfies Ti = 2, a speculative inversion control unit 62 determines that the inversion candidate spin is a collective inversion target that complies with the 2way-1hot constraint. Then, the speculative inversion control unit 62 instructs an inverted spin confirmation unit 61 to confirm an inverted spin in speculative inversion.

Upon receiving the instruction to confirm the inverted spin in the speculative inversion from the speculative inversion control unit 62, the inverted spin confirmation unit 61 confirms the inversion of the inversion candidate spin regardless of a value of an inversion candidate flag and performs the speculative inversion.

Furthermore, in a case where a selection candidate spin is an adoption determination target, the inverted spin confirmation unit 61 receives an instruction to determine whether or not to adopt the collective inversion from the speculative inversion control unit 62. Then, the inverted spin confirmation unit 61 checks the inversion candidate flag and determines whether or not to adopt the collective inversion. In a case where the collective inversion is adopted, the inverted spin confirmation unit 61 confirms the selection candidate spin as an inverted spin. Then, the inverted spin confirmation unit 61 outputs the confirmation of the inverted spin to an energy management unit 70 and each annealing unit 10.

On the other hand, in a case where the collective inversion is not adopted, the inverted spin confirmation unit 61 specifies a speculative inverted spin from spin information held by a spin information holding unit 63, generates a condition to select the speculative inverted spin, and outputs the generated condition to the annealing unit 10. Moreover, the inverted spin confirmation unit 61 outputs clearing of the spin information and a reading condition to the spin information holding unit 63 and a reading condition generation unit 64. Thereafter, upon receiving an instruction to confirm the inverted spin in restoration from the speculative inversion control unit 62, the inverted spin confirmation unit 61 outputs the confirmation of the inverted spin to the energy management unit 70 and the annealing unit 10. According to the above-described process when the inverted spin confirmation unit 61 does not adopt the collective inversion, the restoration is completed.

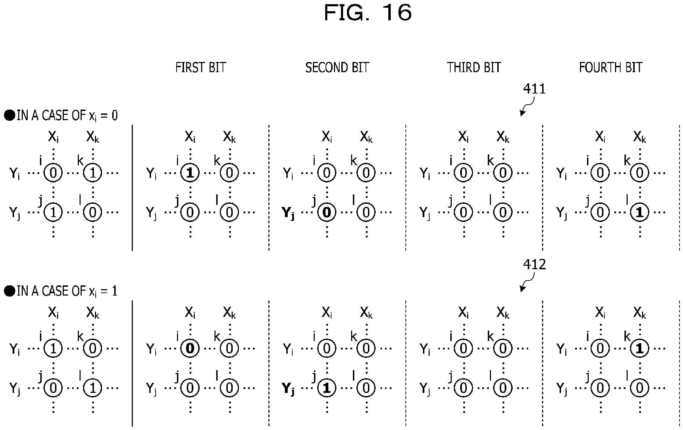

The reading condition generation unit 64 sets a reading condition so that a bit to be collectively inverted is selected as illustrated in FIG. 16. FIG. 16 is a diagram illustrating an example of a spin inversion method according to a 2way-1hot constraint by an Ising calculation device according to the fourth embodiment.

Here, four bits are represented as a bit i, a bit k, a bit j, and a bit I. The bits i to I are arranged in a grid pattern, and each two bits are vertically and horizontally arranged. Then, the bit i belongs to the first group Xi and the second group Yi. Furthermore, the bit j belongs to the first group Xi and a second group Yj. Furthermore, the bit k belongs to a first group Xj and the second group Yi. Furthermore, the bit I belongs to the first group Xj and the second group Yj. In this case, because the bits comply with the 2way-1hot constraint, the adjacent bits of the bits i to I are in different spin states.

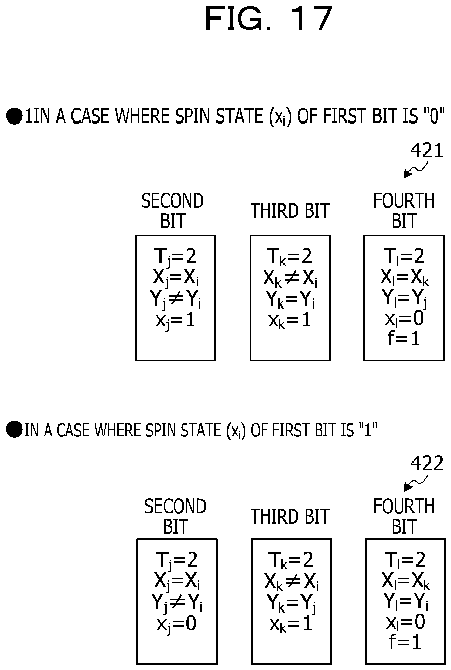

Then, the reading condition generation unit 64 sets the reading condition of the subsequent bit of the first bit to be collectively inverted as illustrated in FIG. 17 so as to perform inversion illustrated in FIG. 16. FIG. 17 is a diagram illustrating an example of the reading condition according to the fourth embodiment. Here, the first to the fourth bits are respectively the first to the fourth selected bits in the collective inversion.

For example, in a case where a spin state of the first spin that is collectively inverted is zero as in an inversion transition 411 in FIG. 16, the reading condition generation unit 64 generates reading conditions of the second to the fourth bits as reading conditions 421 in FIG. 17. Here, the references i, j, k, and I respectively represent the first selected spin, the second selected spin, the third selected spin, and the fourth selected spin. Furthermore, the reference f represents a condition that requests to satisfy an inversion formula, and a condition is that the inversion formula is satisfied when the value of f is one. Because the fourth bits is a bit in which whether or not to adopt the collective inversion is determined, the reading condition generation unit 64 includes f = 1 in a reading condition of the fourth-bit spin. On the other hand, because the second and the third bits are speculatively inverted even if the inversion determination formula is not satisfied, the reading condition generation unit 64 does not include the condition of f in the reading conditions of the spins of the second and the third bits. Furthermore, according to Ti = 2, bits complying with the 2way-1hot constraint are selected as the second to the fourth bits.

If the first bit is a target of the collective inversion, the speculative inversion is performed. Next, according to a reading condition of the second bit in the reading conditions 421, in the second bit, a bit xj is inverted as indicated in the second bit in FIG. 16. Next, according to a reading condition of the third bit in the reading conditions 421, in the third bit, a bit xk is inverted as indicated in the third bit in FIG. 16. Next, according to a reading condition of the fourth bit in the reading conditions 421, in the fourth bit, a bit xl is inverted as indicated in the fourth bit in FIG. 16, and the adoption determination is made.

Furthermore, in a case where a spin state of a first spin to be collectively inverted is one as in an inversion transition 412 in FIG. 16, the reading condition generation unit 64 generates reading conditions of the second to the fourth bits as reading conditions 422 in FIG. 17.

If the first bit is a target of the collective inversion, the speculative inversion is performed. Next, according to a reading condition of the second bit in the reading conditions 422, in the second bit, a bit xj is inverted as indicated in the second bit in FIG. 16. Next, according to a reading condition of the third bit in the reading conditions 422, in the third bit, a bit xl is inverted as indicated in the third bit in FIG. 16. Next, according to a reading condition of the fourth bit in the reading conditions 422, in the fourth bit, a bit xk is inverted as indicated in the fourth bit in FIG. 16, and in addition, the adoption determination is made.

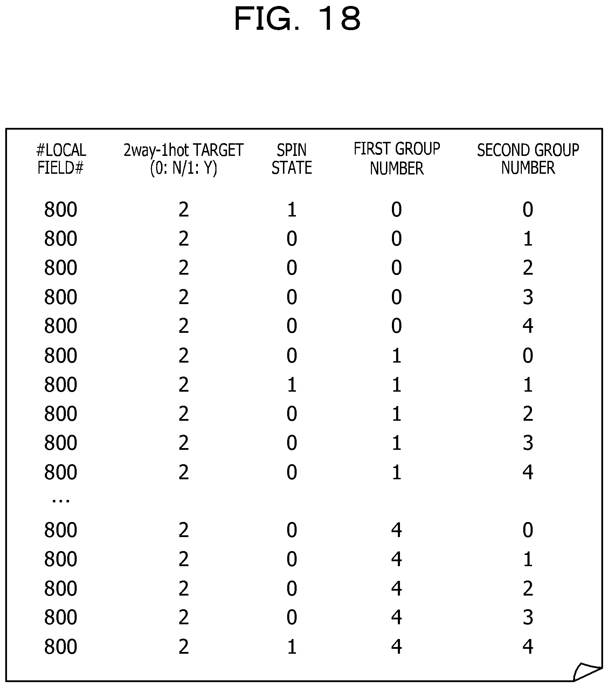

A state satisfying the 2way-1hot constraint is input to the annealing unit 10 as initial setting. FIG. 18 is a diagram illustrating an example of an initial value setting instruction by the Ising calculation device according to the fourth embodiment. As illustrated in FIG. 18, the Ising calculation device 1 according to the present embodiment sets the spin attribute that satisfies the 2way-1hot constraint and the initial values of the local field and the spin state.

As in the first embodiment, the Ising calculation device 1 according to the present embodiment holds the information regarding the spin state for restoration and the local field for restoration. Then, the Ising calculation device 1 restores the spin state and the local field using the information regarding the spin state for restoration and the local field for restoration. Therefore, the optimum solution search process by the Ising calculation device 1 according to the present embodiment is represented as the flowchart in FIG. 3A and 3B as in the first embodiment. Then, in the Ising calculation device 1 according to the present embodiment, in the process of step S107 in the flowchart in FIG. 3, if the inversion candidate spin is the fourth bit spin that is a spin to be collectively inverted, the speculative inversion control unit 62 determines the inversion candidate spin as the adoption determination target of the collective inversion.

As described above, the Ising calculation device according to the present embodiment can solve the problem having the 2way-1hot constraint in a short time. In this way, it is possible to improve a process performance for a combinatorial optimization problem of the Ising calculation device.


**Claims**

1. An optimization apparatus comprising:

   a temperature control unit configured to control a temperature value indicating a temperature;
   an annealing unit configured to change a state of any one of a plurality of state variables included in an evaluation function representing energy, calculate a change amount of the energy represented by the evaluation function, and obtain a first total change amount by adding a second total change amount and the calculated change amount;

a speculative inversion control unit configured to repeat a process for speculatively selecting the state variable to be changed and making the annealing unit obtain the first total change amount until the changed state variables reaches a predetermined number;

an adoption determination unit configured to stochastically determine whether or not to adopt a state transition in which the predetermined number of the state variables are changed by the annealing unit according to a correlation relationship between a threshold and the first total amount, the threshold being calculated based on the temperature value and a random number value;

an energy calculation unit configured to calculate transited energy after performed the state transition when the state transition being determined to be adopted; and

a search unit configured to specify the transited energy as a minimum energy when the transited energy is less than a previously specified minimum energy.

2. The optimization apparatus according to claim 1, further comprising:
a reading condition generation unit configured to generate a reading condition used to determine the state variable to be selected next based on the state variable selected by the speculative inversion control unit and make the annealing unit change a state of the state variable satisfying the generated reading condition.

3. The optimization apparatus according to claim 2, wherein
the reading condition is a condition for selection the state variable included in a specific range of the state variable that is the specific range in which the state variable of which the state has been changed by the annealing unit is included and one of the plurality of state variables is one and the other state variables are zero.

4. The optimization apparatus according to claim 2, wherein
the reading condition is a condition for selection the state variable included in two groups of grouped state variables that are the two groups in which the state variable of which the state has been changed by the annealing unit is included and one of the state variables is one in each group.

5. The optimization apparatus according to any one of claims 1 to 4, wherein
the annealing unit stores the state variable and a local field before the state transition and,
the annealing unit restores, when the adoption determination unit determines not to perform adoption, a state before the state transition based on the stored state variable and the stored local field.

6. The optimizer according to any one of claims 1 to 4, wherein
when the adoption determination unit determines not to perform adoption, the annealing unit restores a state before the state transition by sequentially changing respective states of the predetermined number of the state variables to original states.

7. An optimization method comprising:

controlling a temperature value indicating a temperature;
changing a state of any one of a plurality of state variables included in an evaluation function representing energy;
calculating a change amount of the energy represented by the evaluation function;
obtaining a first total change amount by adding a second total change amount and the calculated change amount;
repeating a process including speculatively selecting the state variable to be changed and obtaining the first total change amount until the changed state variables reaches a predetermined number;
stochastically determining whether or not to adopt a state transition in which the predetermined number of the state variables are changed according to a correlation relationship between a threshold and the first total amount the threshold being calculated based on the temperature value and a random number value;
calculating transited energy after performed the state transition when the state transition being determined to be adopted; and
specifying the transited energy as a minimum energy when the transited energy is less than a previously specified minimum energy.

8. The optimization method according to claim 7, further comprising:

generating a reading condition used to determine the state variable to be selected next based on the state variable selected, wherein
the process includes selecting the state variable satisfying the reading condition.

9. The optimization method according to claim 8, wherein
the reading condition is a condition for selecting the state variable included in a specific range of the state variable that is the specific range in which the state variable of which the state has been changed.

10. The optimization method according to claim 8, wherein
the reading condition is a condition for selection the state variable included in two groups of grouped state variables that are the two groups in which the state variable of which the state has been changed.

11. An optimization program executed by an optimization apparatus, the optimization program comprising:

controlling a temperature value indicating a temperature;
changing a state of any one of a plurality of state variables included in an evaluation function representing energy;
calculating a change amount of the energy represented by the evaluation function;
obtaining a first total change amount by adding a second total change amount and the calculated change amount;
repeating a process including speculatively selecting the state variable to be changed and obtaining the first total change amount until the changed state variables reaches a predetermined number;
stochastically determining whether or not to adopt a state transition in which the predetermined number of the state variables are changed according to a correlation relationship between a threshold and the first total amount the threshold being calculated based on the temperature value and a random number value;
calculating transited energy after performed the state transition when the state transition being determined to be adopted; and
specifying the transited energy as a minimum energy when the transited energy is less than a previously specified minimum energy.

12. The optimization program according to claim 11, further comprising:

generating a reading condition used to determine the state variable to be selected next based on the state variable selected, wherein
the process includes selecting the state variable satisfying the reading condition.

13. The optimization program according to claim 12, wherein
the reading condition is a condition for selecting the state variable included in a specific range of the state variable that is the specific range in which the state variable of which the state has been changed.

14. The optimization program according to claim 12, wherein
the reading condition is a condition for selection the state variable included in two groups of grouped state variables that are the two groups in which the state variable of which the state has been changed.

# FIG. 1

ISING CALCULATION DEVICE — 1

- ANNEALING UNIT — 10 (×4)
- TEMPERATURE CONTROL UNIT — 20
- THRESHOLD GENERATION UNIT — 30
- RANDOM NUMBER GENERATION UNIT — 40
- INVERTED SPIN CANDIDATE SELECTION UNIT — 50
- ENERGY MANAGEMENT UNIT — 70
  - ENERGY FOR SPECULATIVE INVERSION CALCULATION UNIT — 71
  - ENERGY CALCULATION UNIT — 72
- CONTROL SIGNAL GENERATION UNIT — 60
  - INVERTED SPIN CONFIRMATION UNIT — 61
  - SPECULATIVE INVERSION CONTROL UNIT — 62
  - SPIN INFORMATION HOLDING UNIT — 63
  - READING CONDITION GENERATION UNIT — 64
- SEARCH RESULT HOLDING UNIT — 80

# FIG. 2

ANNEALING UNIT ⌐10

| LOCAL FIELD FOR RESTORATION HOLDING UNIT ⌐111 | LOCAL FIELD MANAGEMENT UNIT ⌐101 | SPIN STATE MANAGEMENT UNIT ⌐102 | SPIN STATE FOR RESTORATION HOLDING UNIT ⌐112 |

ENERGY CHANGE AMOUNT CALCULATION UNIT ⌐103

ENERGY MANAGEMENT UNIT ⌐70

SPECULATIVE INVERSION ENERGY ADDITION UNIT ⌐104

THRESHOLD GENERATION UNIT ⌐30

INVERSION DETERMINATION FORMULA EVALUATION UNIT ⌐105

SPIN ATTRIBUTE HOLDING UNIT ~108

DETERMINATION UNIT ⌐106

SPIN NUMBER HOLDING UNIT ⌐107

INVERTED SPIN CANDIDATE SELECTION UNIT ⌐50

CONTROL SIGNAL GENERATION UNIT ⌐60

# FIG. 3A

START

SET INITIAL VALUE — S101

E

CALCULATE ENERGY CHANGE AMOUNT AT TIME OF INVERSION — S102

ADD ENERGY CHANGE AMOUNT FOR SPECULATIVE INVERSION — S103

GENERATE INVERSION CANDIDATE FLAG — S104

SELECT INVERSION CANDIDATE SPIN — S105

S106
COLLECTIVE INVERSION TARGET? — YES

NO

S118
ADOPT INVERSION? — NO → D

YES

S107
ADOPTION DETERMINATION TARGET OF COLLECTIVE INVERSION? — NO → C

YES

S114
ADOPT INVERSION? — YES

NO

S119
CONFIRM INVERTED SPIN

S120
CLEAR SPIN INFORMATION AND READING CONDITION

S121
UPDATE INFORMATION REGARDING ENERGY

S122
CLEAR ENERGY CHANGE AMOUNT FOR SPECULATIVE INVERSION

A

S115
CLEAR SPIN INFORMATION AND READING CONDITION

S116
CLEAR ENERGY CHANGE AMOUNT FOR SPECULATIVE INVERSION

S117
RESTORE SPIN STATE AND LOCAL FIELD

B

# FIG. 3B

A

**S123** LESS THAN MINIMUM ENERGY?

NO

YES

**S124** UPDATE MINIMUM ENERGY AND SAVE SPIN STATE

**S125** UPDATE SPIN STATE

**S126** UPDATE LOCAL FIELD

**S127** SAVE SPIN STATE FOR RESTORATION AND LOCAL FIELD FOR RESTORATION

B

C

**S108** CONFIRM INVERTED SPIN

**S109** SAVE SPIN INFORMATION OF SPECULATIVE INVERTED SPIN

**S110** GENERATE READING CONDITION

**S111** UPDATE ENERGY CHANGE AMOUNT FOR SPECULATIVE INVERSION

**S112** UPDATE SPIN STATE

**S113** UPDATE LOCAL FIELD

D

**S128** TERMINATE PREDETERMINED NUMBER OF TIMES OF CALCULATION?

NO

E

YES

END

# FIG. 4

# FIG. 5

FIG. 6

| NUMBER OF SPINS | NUMBER OF CYCLES | |
| | AT TIME OF ADOPTION | AT TIME OF NON-ADOPTION |
| N | N | N |

216

211 212 213 214 215
202

(1) (2) (3) (4) or (4)

(1) (2) (3) (4) ADOPT (4) NOT ADOPT

ADOPTION DETERMINATION

# FIG. 7

```
┌─51
│ PROBLEM TO BE
│ SOLVED
                                          ┌─52
                                          │ OPERATION
                                          │ CONDITION
```

┌─S151
CONVERT PROBLEM
INTO ISING MODEL

┌─S152
EXTRACT CONSTRAINT
CONDITION

┌─53
ISING MODEL
ENERGY FORMULA

┌─54
SPIN ATTRIBUTE AND
INITIAL SPIN STATE

┌─153
CALCULATE INITIAL
VALUES OF LOCAL
FIELD AND ENERGY

┌─154
INPUT PARAMETER

┌─S155
EXECUTE CALCULATION
BY ISING CALCULATION
DEVICE

┌─55
CALCULATION
RESULT

┌─S156
ACQUIRE RESULT

┌─S157
INTERPRET RESULT

┌─56
SOLUTION FOR
PROBLEM TO BE
SOLVED

# FIG. 8

ANNEALING UNIT ⟨10

| LOCAL FIELD MANAGEMENT UNIT ⟨101 | SPIN STATE MANAGEMENT UNIT ⟨102 |

ENERGY CHANGE AMOUNT CALCULATION UNIT ⟨103

ENERGY MANAGEMENT UNIT ⟨70

THRESHOLD GENERATION UNIT ⟨30

SPECULATIVE INVERSION ENERGY ADDITION UNIT ⟨104

INVERSION DETERMINATION FORMULA EVALUATION UNIT ⟨105

SPIN ATTRIBUTE HOLDING UNIT ⌐108

DETERMINATION UNIT ⟨106

SPIN NUMBER HOLDING UNIT ⟨107

INVERTED SPIN CANDIDATE SELECTION UNIT ⟨50

CONTROL SIGNAL GENERATION UNIT ⟨60

# FIG. 9A

START

SET INITIAL VALUE — S201

(E) → CALCULATE ENERGY CHANGE AMOUNT AT TIME OF INVERSION — S202

ADD ENERGY CHANGE AMOUNT FOR SPECULATIVE INVERSION — S203

GENERATE INVERSION CANDIDATE FLAG — S204

SELECT INVERSION CANDIDATE SPIN — S205

RESTORATION PROCESS? — S206
— YES → CONFIRM INVERTED SPIN — S224

COMPLETE RESTORATION OF ALL RESTORATION TARGETS? — S225
— NO → (B)
— YES → CLEAR RESTORATION PROCESS FLAG — S226 → (B)

— NO
COLLECTIVE INVERSION TARGET? — S207
— YES → ADOPTION DETERMINATION TARGET OF COLLECTIVE INVERSION? — S208
— NO → (C)
— YES → ADOPT INVERSION? — S213
— YES → (to S218 path)
— NO → SPECIFY SPECULATIVE INVERTED SPIN — S214

— NO
ADOPT INVERSION? — S217
— NO → (D)
— YES →

CONFIRM INVERTED SPIN — S218

CLEAR SPIN INFORMATION AND READING CONDITION — S219

UPDATE INFORMATION REGARDING ENERGY — S220

GENERATE RESTORATION PROCESS FLAG — S215

CLEAR SPIN INFORMATION AND READING CONDITION — S216

CLEAR ENERGY CHANGE AMOUNT FOR SPECULATIVE INVERSION — S221

(A)

# FIG. 9B

Ⓒ

CONFIRM INVERTED SPIN — S209

SAVE SPIN INFORMATION — S210

GENERATE READING CONDITION — S211

UPDATE ENERGY CHANGE AMOUNT FOR SPECULATIVE INVERSION — S212

Ⓑ

Ⓐ

S222 — LESS THAN MINIMUM ENERGY?

NO

YES — S223 — UPDATE MINIMUM ENERGY AND SAVE SPIN STATE

UPDATE SPIN STATE — S227

UPDATE LOCAL FIELD — S228

Ⓓ

S229 — TERMINATE PREDETERMINED NUMBER OF TIMES OF CALCULATION?

NO — Ⓔ

YES

END

# FIG. 10

| NUMBER OF SPINS | NUMBER OF CYCLES | |
|---|---|---|
| | AT TIME OF ADOPTION | AT TIME OF NON-ADOPTION |
| 2 | 2 | 2 |
| 3 | 3 | 4 |
| 4 | 4 | 6 |
| N | N | 2(N-1) |

# FIG. 11

# FIG. 12

| #LOCAL FIELD# | 1-hot TARGET (0: N/1: Y) | SPIN STATE | GROUP NUMBER | IN-GROUP IDENTIFIER |
|---|---|---|---|---|
| 100 | 0 | 0 | 0 | 0 |
| 100 | 0 | 0 | 0 | 0 |
| 200 | 1 | 1 | 0 | 0 |
| 200 | 1 | 0 | 0 | 1 |
| 200 | 1 | 0 | 0 | 2 |
| 300 | 1 | 1 | 1 | 0 |
| 300 | 1 | 0 | 1 | 1 |
| 300 | 1 | 0 | 1 | 2 |
| 300 | 1 | 0 | 1 | 3 |
| 300 | 1 | 0 | 1 | 4 |
| ... | | | | |

# FIG. 13A

START

SET INITIAL VALUE — S301

(D) →

CALCULATE ENERGY CHANGE AMOUNT AT TIME OF INVERSION — S302

ADD ENERGY CHANGE AMOUNT FOR SPECULATIVE INVERSION — S303

GENERATE INVERSION CANDIDATE FLAG — S304

SELECT INVERSION CANDIDATE SPIN — S305

S306

T=1? — YES

NO

S307

ADOPTION DETERMINATION TARGET OF COLLECTIVE INVERSION? — NO → (B)

YES

S315

ADOPT INVERSION? — NO → (C)

YES

S312

ADOPT INVERSION? — YES

NO

S316

CONFIRM INVERTED SPIN

S313

SPECIFY SPECULATIVE INVERTED SPIN

S317

CLEAR SPIN INFORMATION AND READING CONDITION

S314

CLEAR SPIN INFORMATION AND READING CONDITION

S318

UPDATE INFORMATION REGARDING ENERGY

S319

CLEAR ENERGY CHANGE AMOUNT FOR SPECULATIVE INVERSION

(A)

# FIG. 13B

Ⓑ

CONFIRM INVERTED SPIN — S308

SAVE SPIN INFORMATION — S309

Ⓐ

LESS THAN MINIMUM ENERGY? — S320

NO

GENERATE READING CONDITION — S310

YES

UPDATE MINIMUM ENERGY AND SAVE SPIN STATE — S321

UPDATE ENERGY CHANGE AMOUNT FOR SPECULATIVE INVERSION — S311

S322

UPDATE SPIN STATE

UPDATE LOCAL FIELD — S323

Ⓒ

TERMINATE PREDETERMINED NUMBER OF TIMES OF CALCULATION? — S324

NO Ⓓ

YES

END

# FIG. 14

401

CITY 402

|       | A | B | C | D | E |
|-------|---|---|---|---|---|
| 1     | 1 | 0 | 0 | 0 | 0 |
| 2     | 0 | 0 | 1 | 0 | 0 |
| ORDER 3 | 0 | 0 | 0 | 0 | 1 |
| 4     | 0 | 0 | 0 | 1 | 0 |
| 5     | 0 | 1 | 0 | 0 | 0 |

EQUIVALENT

ONE-DIMENSIONALLY
ILLUSTRATE

403

25-bit SPINS

| 1 | 0 | 0 | 0 | 0 | 0 | 0 | 1 | 0 | 0 | ⋯ | 0 | 1 | 0 | 0 | 0 |

EP 3 975 032 A1

# FIG. 15

ANNEALING UNIT — 10

ENERGY MANAGEMENT UNIT — 70

THRESHOLD GENERATION UNIT — 30

LOCAL FIELD FOR RESTORATION HOLDING UNIT — 111

LOCAL FIELD MANAGEMENT UNIT — 101

SPIN STATE MANAGEMENT UNIT — 102

SPIN STATE FOR RESTORATION HOLDING UNIT — 112

ENERGY CHANGE AMOUNT CALCULATION UNIT — 103

SPECULATIVE INVERSION ENERGY ADDITION UNIT — 104

INVERSION DETERMINATION FORMULA EVALUATION UNIT — 105

SPIN ATTRIBUTE HOLDING UNIT — 108

2way-1hot TARGET INFORMATION — 185

FIRST GROUP NUMBER — 186

SECOND GROUP NUMBER — 187

DETERMINATION UNIT — 106

SPIN NUMBER HOLDING UNIT — 107

INVERTED SPIN CANDIDATE SELECTION UNIT — 50

CONTROL SIGNAL GENERATION UNIT — 60

46

# FIG. 16

# FIG. 17

● 1IN A CASE WHERE SPIN STATE ($x_i$) OF FIRST BIT IS "0"

421

|  SECOND BIT  | THIRD BIT | FOURTH BIT |
|---|---|---|
| $T_j=2$ <br> $X_j=X_i$ <br> $Y_j \neq Y_i$ <br> $x_j=1$ | $T_k=2$ <br> $X_k \neq X_i$ <br> $Y_k=Y_i$ <br> $x_k=1$ | $T_l=2$ <br> $X_l=X_k$ <br> $Y_l=Y_j$ <br> $x_l=0$ <br> $f=1$ |

● IN A CASE WHERE SPIN STATE ($x_i$) OF FIRST BIT IS "1"

422

|  SECOND BIT  | THIRD BIT | FOURTH BIT |
|---|---|---|
| $T_j=2$ <br> $X_j=X_i$ <br> $Y_j \neq Y_i$ <br> $x_j=0$ | $T_k=2$ <br> $X_k \neq X_i$ <br> $Y_k=Y_j$ <br> $x_k=1$ | $T_l=2$ <br> $X_l=X_k$ <br> $Y_l=Y_i$ <br> $x_l=0$ <br> $f=1$ |

# FIG. 18

| #LOCAL FIELD# | 2way-1hot TARGET (0: N/1: Y) | SPIN STATE | FIRST GROUP NUMBER | SECOND GROUP NUMBER |
|---|---|---|---|---|
| 800 | 2 | 1 | 0 | 0 |
| 800 | 2 | 0 | 0 | 1 |
| 800 | 2 | 0 | 0 | 2 |
| 800 | 2 | 0 | 0 | 3 |
| 800 | 2 | 0 | 0 | 4 |
| 800 | 2 | 0 | 1 | 0 |
| 800 | 2 | 1 | 1 | 1 |
| 800 | 2 | 0 | 1 | 2 |
| 800 | 2 | 0 | 1 | 3 |
| 800 | 2 | 0 | 1 | 4 |
| ... | | | | |
| 800 | 2 | 0 | 4 | 0 |
| 800 | 2 | 0 | 4 | 1 |
| 800 | 2 | 0 | 4 | 2 |
| 800 | 2 | 0 | 4 | 3 |
| 800 | 2 | 1 | 4 | 4 |

Europäisches
Patentamt

European
Patent Office

Office européen
des brevets

# EUROPEAN SEARCH REPORT

Application Number

EP 21 15 3977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/005114 A1 (TOMITA YASUMOTO [JP] ET AL) 4 January 2018 (2018-01-04) * paragraph [0001] – paragraph [0174] * * figures 1–20 * | 1–14 | INV. G06F30/20 G06F111/06 G06N3/04 G06N3/063 G06N5/00 |
| A | SHAWN ANDREWS ET AL: "Monte Carlo study of degenerate groundstates and residual entropy in a frustrated honeycomb lattice Ising model", ARXIV.ORG, CORNELL UNIVERSITY LIBRARY, 201 OLIN LIBRARY CORNELL UNIVERSITY ITHACA, NY 14853, 17 December 2008 (2008-12-17), XP080353724, DOI: 10.1103/PHYSREVE.79.041127 * page 1 – page 13 * | 1–14 | |

TECHNICAL FIELDS
SEARCHED       (IPC)

G06N
G06F

The present search report has been drawn up for all claims

| Place of search | Date of completion of the search | Examiner |
|---|---|---|
| Munich | 22 February 2022 | Ernst, Jens |

EPO FORM 1503 03.82 (P04C01)

## EP 3 975 032 A1

### ANNEX TO THE EUROPEAN SEARCH REPORT
### ON EUROPEAN PATENT APPLICATION NO.

EP 21 15 3977

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2022

| Patent document cited in search report | Publication date | Patent family member(s) | Publication date |
|---|---|---|---|
| US 2018005114 A1 | 04-01-2018 | JP 6468254 B2 | 13-02-2019 |
| | | JP 2018005541 A | 11-01-2018 |
| | | US 2018005114 A1 | 04-01-2018 |

For more details about this annex : see Official Journal of the European Patent Office, No. 12/82

EPO FORM P0459

**EP 3 975 032 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219952 A
- JP 2006072820 A